# EUROPEAN PATENT APPLICATION

(11) **EP 1 611 931 A1**
(43) Date of publication of application: **04.01.2006**
(21) Application number: 05013962.5
(22) Date of filing: 28.06.2005
(51) Int. Cl.: A63F 13/10, A63F 13/12

(54) **Game system**

(30) Priority: 01.07.2004 JP 2004196036; 16.07.2004 JP 2004209943
(71) Applicant: Aruze Corp., Tokyo (JP)
(72) Inventor: Kobayashi, Takahiko c/o Aruze Corp., Tokyo 135-0063 (JP); Kogo, Junichi, Aruze Corp., Tokyo 135-0063 (JP)
(74) Representative: Grünecker, Kinkeldey, Stockmair & Schwanhäusser Anwaltssozietät

(57) **Abstract**

This game system includes a plurality of terminals each of which has display means and input means, and a server connected to the terminals through communication lines. The game system executes a game performing the fighting between plurality of characters controlled by the terminals operated by a plurality of players. The game system comprises position data storage means storing position data representing the positions of characters disposed in the game area where a plurality of characters operated by each player can be disposed; position renewal means renewing the position data stored in the position data storage means, based on the input operation of each player using by the input means; first display control means displaying a game area image representing the game area where characters are disposed based on the position data stored in the position data storage means in the first display area owned by the display means; and second display control means displaying the fighting image representing the fighting between the characters in the second display area owned by the display means when the fighting between the characters is performed in the game area.

## Description

The present disclosure relates to subject matters contained in Japanese PatentApplicationNo. 2004-196036 filed on July 1, 2004, and Japanese Patent Application No. 2004-209943 filed on July 16, 2004, which are expressly incorporated herein by reference in its entireties.

### BACKGROUND OF THE INVENTION

### 1. Field of the Invention

The present invention relates to a game system comprised by a plurality of terminal and a server connected through a communication line. Particularly, it relates to a game system capable of executing an on-line game of a participation type by a large number of people such as a RTS (Real Time Strategy).

### 2. Description of the Prior Art

In recent years, accompanied with development of information communication technology, a game system comprised by a plurality of commercial or home use terminal and a server connected through a communication line has come into wide use. Such a game system, for example, as disclosed in Japanese Paten Laid-Open Publication No. 2003-103054, can execute various on-line games. Recently, as an on-line game, for example, the on-line game of a participation type by a large number of people such as the RTS (Real Time Strategy) has been provided.

The RTS is a strategic simulation game in which each player disposes a plurality of characters in the same play field and mutually operates the characters so as to let them perform a fighting, and the time within the game elapses (in real time) . Consequently, each player must give suitable instruction to each character from time to time, and a high-level strategy is required. It can be said that possession of a high-level strategy with realistic sensations and heightening of tension in this manner is the most attractive aspect of the RTS.

In the RTS, since a plurality of characters operated by each player are disposed in the play field, a play field where each character is shrunk is displayed. If the fighting of the characters is continued as it is on the play field, the fighting between the shrunk characters is performed. Therefore, in general, in the RTS, when the fighting starts on the play field, the scene is switched over to a fighting image showing the fighting between the characters, which is displayed in magnification. Recently, there has been appeared a RTS such as using a three-dimensional scenography as a fighting image and performing an overwhelming dynamic representation.

However, as described above, in the RTS, since the game proceeds in real time, there has been a problem that, when the fighting starts and the scene is switched over to display the fighting image, the game situation in the play field cannot be ascertained. Further, while the fighting image is displayed, since no instruction can be given to other characters, there has been a problem that the player is sometimes unable to realize a strategy intended by him so that the strategic property of the game is degraded. Further, inability of giving the instructions to other characters because of the switching over of the scene to the fighting image every time the fighting starts makes the game incapable to perform in real time, and therefore, there has been a problem that it is impossible to enjoy realistic sensations and heightening of tension, which are the characteristics of the RTS.

### SUMMARY OF THE INVENTION

The present invention has been performed in view of the above described problems, and an object of the invention is to provide a game system capable of ascertaining a game situation in a play field while a fighting image is displayed, and executing a game having a high-level strategy with realistic sensations and heightening of tension.

(1) A first aspect of the present invention is proposed as the following game system. That is, this game system includes a plurality of terminals each of which has a display unit and an input unit, and a server connected to the terminals through communication lines. The game system executes a game performing the fighting between a plurality of characters controlled by the terminals operated by a plurality of players. The game system comprises a position data storage unit (corresponding to position data storage means) storing position data representing the positions of characters disposed in the game area where a plurality of characters operated by each player can be disposed; a position renewal unit (corresponding to position renewal means) renewing the position data stored in the position data storage unit, based on the input operation of each player using by the input unit; a first display control unit (corresponding to first display control means) displaying a game area image representing the game area where characters are disposed based on the position data stored in the position data storage unit in the first display area owned by the display unit; and a second display control unit (corresponding to second display control means) displaying the fighting image representing the fighting between the characters in the second display area owned by the display unit when the fighting between the characters is performed in the game area.

According to the invention of the first aspect, the game area image representing the game area where the characters are disposed operated by each player is displayed in the first display area, and the fighting image representing the fighting between the characters performed separately is displayed in the second display area, and therefore, it is possible to enjoy the fighting between the characters through the fighting image, while ascertaining the game situation developed on the game area and giving the instructions to other characters. As a result, while enjoying an overwhelming dynamic fighting, a game having a strategic property with realistic sensations and heightening of tension can be played.

Further, the invention according to the first aspect provides the following.

(2) The game system as described above is characterized in that the input unit is a touch panel, which is provided in front of the display unit, and can detect a touch by the player, and when detecting the touch, outputs a detection signal showing the touch position, wherein the position renewal unit, in case the touch position shown by the detection signal outputted from the touch panel matches the display position of the character in the game area image displayed in the first display area, renews the position data of the character based on the detection signal.

According to the invention of (2), even while the fighting image is displayed, by touching the characters on the game area through the touch panel, suitable instructions can be given to a plurality of characters from time to time, and therefore, a game having a high strategic property with more realistic sensations and heightening of tension can be played.

Further, the present invention provides the following.

(3) The system game as described in (1) or (2) is characterized in that the display unit is capable of having a plurality of second display areas, wherein the second display control unit, in case the fighting between the characters is performed in plurality in the game area, displays the fighting image representing each fighting in each of plural second display areas.

According to the invention of (3), in case a plurality of fighting are performed on the game area, since the fighting image representing each fighting can be simultaneously displayed, a merit of the RTS in which the game having realistic sensations and heightening of tension proceeds in real time can be sufficiently enjoyed.

The game system may have an additional feature that the characters include an ally character and an enemy character, and the ally character can perform plural types of all-out attacks which are different in at least one of the range of the play field which becomes the obj ect of the all-out attack, the form of the all-out attack performed by the ally character, and the damage given to the enemy character.

Further, the game systemmayhave other additional feature that the input unit accepts an input for designating any one of the plural types of the all-out attacks

Further, the second aspect of the invention is a game system including a plurality of terminals each having a display unit and an input unit, and a server connected to the terminals through communication lines, the game system executing a game performing the fighting between a plurality of characters including an ally character and an enemy character, controlled by the terminals operated by a plurality of players. The game system comprises a position data storage unit (corresponding to position data storage means) storing position data representing the positions of characters disposed in the game area where a plurality of characters operated by each player can be disposed; a position renewal unit (corresponding to position renewal means) renewing the position data stored in the position data storage unit based on the input operation of each player using the input unit; a first display control unit (corresponding first display control means) displaying a game area image representing the game area where the ally character and the enemy characters are disposed based on the position data stored in the position data storage unit in the first display area owned by the display unit; a second display control unit (corresponding to second display control means) displaying the fighting image representing the fighting between the ally character and the enemy characters in the second display area owned by the display unit when the fighting between the ally character and the enemy characters is performed in the game area; and an attack instruction input unit (corresponding to attack instruction input means) inputting the instruction to the effect that an ally character attacks against the whole or a part of enemy characters disposed within the predetermined range of the game area based on the input operation of the player using the input unit, wherein the first display control unit, when the instruction is inputted by the attach instruction input unit, displays the game area image representing the game area where the ally character and the enemy characters are disposed in the first display area in the aspect where the ally character attacks the whole or a part of the enemy characters disposed within the predetermined range of the game area.

According to the invention according to the second aspect, the game area image representing the game area where the ally character operated by the player and the enemy character operated by another player are disposed is displayed in the first display area, and the fighting image representing the separate fighting between the ally character and the enemy character is displayed in the second display area, and therefore, while enjoying the fighting between the characters through the fighting image, it is possible to ascertain the positional relation between the ally character and the enemy character in the game area and the game situation developed in the game area, and give the instructions to other characters.

Further, even when the separate fighting between the ally character and the enemy character is performed and the state of the fighting is displayed in the second display area, it is possible to input the instruction to the effect that the attack be performed against a plurality of enemy characters by the ally characters, and when the instruction is inputted, since the state of the attack being performed by the ally characters against apluralityof enemycharacters is displayed in the first display area, two aspects of the fighting such as the separate fighting between the ally character and the enemy character, and an all-out attack against a plurality of enemy characters from the ally characters can be simultaneously enjoyed.

The invention of the second aspect can have the same additional features as the invention of the first aspect has.

As a result, while enjoying an overwhelming dynamic fighting, a game having a strategic property with realistic sensations and heightening of tension can be played.

Additional objects and advantages of the invention will be set forth in the description which follows, and in part will be obvious from the description, or may be learned by practice of the invention. The objects and advantages of the invention may be realized and obtained by means of the instrumentalities and combination particularly pointed out hereinafter.

### BRIEF DESCRIPTION OF THE DRAWINGS

Fig. 1 is a structural drawing of a game system according to the present invention;
Fig. 2 is an oblique view showing external appearance showing eight sets of terminal and card vending machines installed in one outlet;
Fig. 3 is an oblique view showing the external appearance of the terminal;
Fig. 4 is a block diagram showing a hardware structure of the terminal;
Fig. 5 is a block diagram showing a hardware structure of the outlet server;
Fig. 6 is a block diagram showing a hardware structure of a center server;
Fig. 7 is a view showing one example of a game image displayed in a first display of the terminal;
Fig. 8 is a view for explaining each image included in the game image shown in Fig. 7;
Fig. 9 is a view showing an object position table;
Fig. 10 is a flowchart showing the subroutine of an instruction input processing executed in the terminal;
Fig. 11 is a flowchart showing the subroutine of an operation type determination processing called and executed in step S14 of the sub-routing shown in Fig. 10;
Fig. 12 is a view showing a processing content determine table referred to in step S36 of the subroutine show in Fig. 11;
Fig. 13 is a view showing player participation information;
Fig. 14 is a view for explaining the content of transmitting and receiving processing of the data by the outlet server;
Fig. 15 is a flowchart showing the flow of the processing until starting the game in the terminal, the outlet server and the center server;
Fig. 16 is a flowchart showing the subroutine of the initial setting processing called and executed by the outlet server in step S200 in the flowchart shown in Fig. 15;
Fig. 17 is a view showing a support card determine table;
Fig. 18 is a view showing one example of historical data;
Fig. 19 is a view showing one example of an ability value setting table;
Fig. 20 is a view showing one example of player information;
Fig. 21 is a flowchart showing the outline of the processing executed in the terminal;
Fig. 22 is a flowchart showing the outline of the processing executed in the outlet server;
Fig. 23 is a time chart for explaining the processing of step S237 of the flowchart shown in Fig. 22;
Fig. 24 is a view showing a play field image displayed in a first display of the terminal during the game;
Fig. 25 is a flowchart showing the subroutine of a command processing called and executed in step S232 of the flowchart shown in Fig. 22;
Fig. 26 is a flowchart showing the subroutine of a fighting processing called and executed in step S255 of the flowchart shown in Fig. 25;
Fig. 27 is a view showing one example of an ability value correction table;
Fig. 28 (A) is player information before the ability value correction, and Figs. 28(B) to 28(D) are player information after the ability value correction;
Fig. 29 is a view showing a game image displayed in the first display of the terminal and the fighting image displayed in a second display;
Fig. 30 is a view showing one example of a recovery timer setting table;
Fig. 31 is a view showing another example each of the game image displayed in the first display and the fighting image in the second display of the terminal;
Fig. 32 is a structural drawing of the game system according to the present invention;
Fig. 33 is a block diagram showing a hardware structure of the center server;
Fig. 34 is a block diagram showing a hardware structure of the outlet server;
Fig. 35 is an oblique view showing the external appearance of eight sets of the terminal and a card vending machine installed in an outlet;
Fig. 36 is an oblique view showing an external appearance of the terminal;
Fig. 37 is an exploded front view schematically showing an action figure;
Fig. 38 is a block diagram showing a hardware structure of the terminal;
Fig. 39 is a view showing one example of the image displayed in the first display of the terminal;
Fig. 40 is a view showing a character position table;
Fig. 41 is a view showing a character ability value table;
Fig. 42 is a flowchart showing the subroutine of a game processing executed in the terminal;
Fig. 43 is a flowchart showing the subroutine of the fighting processing called and executed in step S1014 of the flowchart shown in Fig. 42;
Fig. 44 is a flowchart showing the subroutine of the total fighting processing called and executed in step S1016 of the flowchart shown in Fig. 42;
Fig. 45 is a flowchart showing the processing executed in a first depiction processing portion;
Fig. 46 is a view showing the images displayed in the first display and the second display while the game proceeds;
Fig. 47 is a view showing the images displayed in the first display and the second display while the game proceeds; and
Fig. 48 is a view showing the images displayed in the first display and the second display while the game proceeds.

The accompanying drawings, which are incorporated in and constitute apart of the specification, illustrate embodiments of the invention, and together with the general description given above and the detailed description of the embodiments given below, serve to explain the principles of the invention.

### DESCRIPTION OF THE PREFERRED EMBODIMENTS

Embodiments according to the present invention will be described below in detail with reference to the drawings.

### [1. First Embodiment of the Invention]

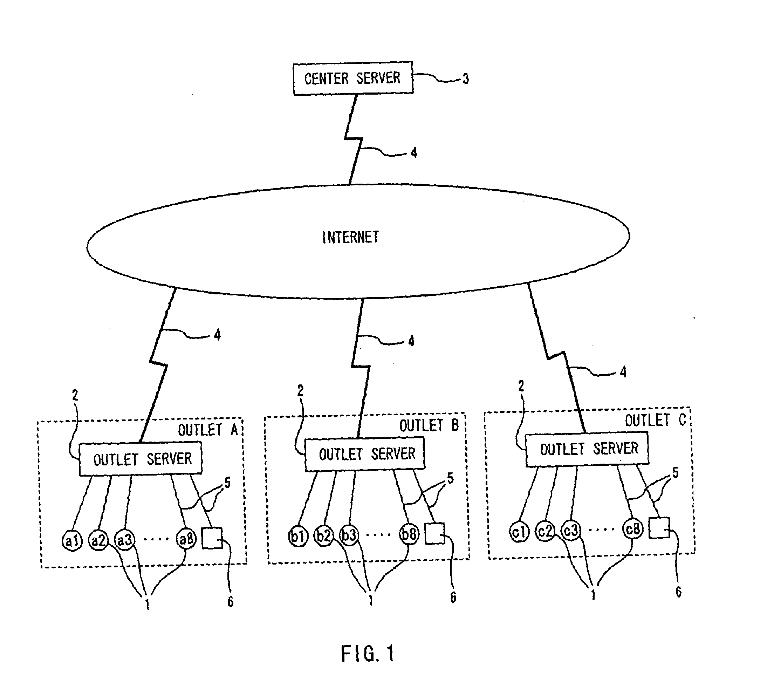

Fig. 1 is a structural drawing showing one example of the game systemaccording to the first embodiment of the present invention.

The game system comprises: a plurality of terminal 1; an outlet server 2 communicatably connected to a plurality (eight sets here) of terminal 1 through a private line 5; and a center server 3 communicatably connected to a plurality of outlet servers 2 through a communication line 4 and managing the game performed by using the terminal 1 by a plurality of players, and moreover, comprises a card vending machine 6 connected to the outlet server 2 through the private line 5 one set each for every outlet. Incidentally, between the outlet servers 2 also, communications are possible through the communication line 4.

The terminal 1 accepts a predetermined operation performed through a touch panel 14 (not shown) by a player, and at the same time, allows a game to proceed based on data transmitted from the outlet server 2 (or center server 3) or data and the like from other terminal 1.

Incidentally, the terminal 1 is associated with machine IDs specific to itself, respectively. The machine ID includes a code for each outlet server 2 connected with the terminal 1 and a code for each terminal 1 within the outlet where the terminal 1 is installed. For example, in case the code of the outlet server A of the outlet A is A, and the code of the terminal 1 within the outlet A is 1, the machine ID of this terminal 1 is a1.

The outlet server 2 is communicatably connected to a plurality (eight sets here) of terminal 1 and the center server 3, respectively, and data transmission and reception is performed between the terminal 1 and the center server 3.

The center server 3 is communicatably connected to a plurality of outlet servers 2, and has a historical data relative to each player. The center server 3 performs the transmission and reception of the data with the terminal 1 through the outlet server 2. In this manner, the player who performs the game in the same play field is decided. In this game system, the maximum up to four persons can play a game in the same play field.

The play field corresponds to a game area in the present invention.

The card vending machine 6 is communicatable with the center server 3 through the outlet server 2. The card vending machine 6 accepts the input operation of personal information performed by the player, and performs the issuance of an ID card 8 (not shown). By the personal information inputted at this time, the center server 3 is registered with the player, and by the center server 3, an identifiable ID data of the player for each player is granted. An ID card 8 to be issued is stored with this ID data.

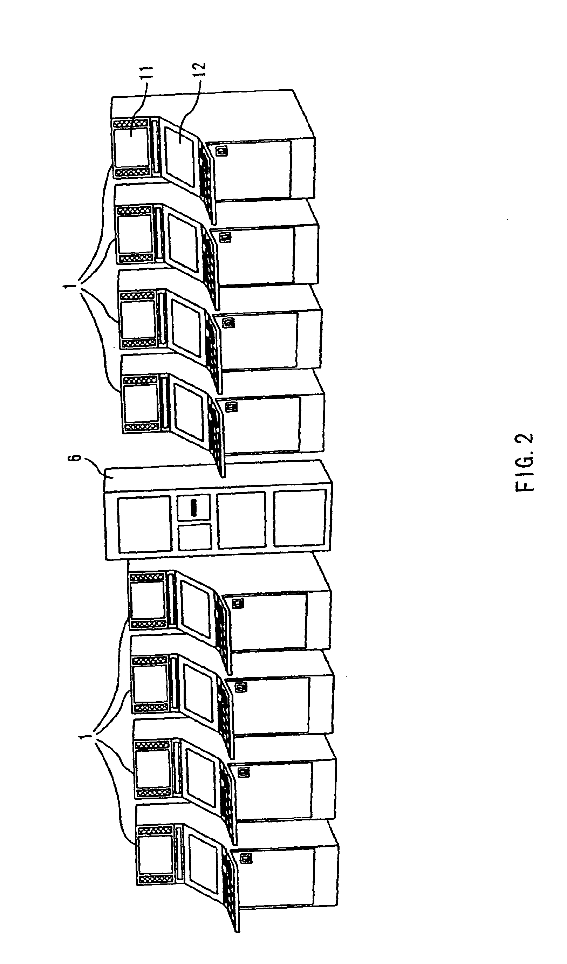

Fig. 2 is an oblique view showing the external appearance of eight sets of the terminal and the card vending machine installed in one outlet.

Incidentally, in the following description, as one example of the terminal, while a commercial game device comprising two displays (first display 11 and second display 12) will be described, the present invention is not particularly limited to this example, and it can be similarly adapted to a home vide game device constituted by connecting the home video game device to a home television receiver, a personal computer functioning as the video game device by executing a video program, and the like.

Further, in the present embodiment, the game performed by using the terminal 1 is a RTS (real time strategy game) using the card, which is such that a player operating the terminal 1, and a player operating another terminal or a CPU player dispose characters on a play field existing on a simulative game space and operate the characters to fight against each other. This game uses a character card corresponding to the character, and a support card affecting the game content or the character.

The character card is a card actually owned by the player, and has individual identifying information. Each character card corresponds to any one of the characters among 108 types of characters appearing on the game. This character card, for example, is sold by the card vending machine 6 and the like.

The character card in the present invention can use, for example, a card comprising a magnetic stripe, an IC card, and the like. Further, in case the IC card is used as the character card, the IC card may be of a contact type or a non-contact type. As the IC card of the non-contact type, for example, a transponder and the like used in a RFID (Radio Frequency Identification) system can be cited. Incidentally, since this technique is a conventionally known technique, and is described in Japanese Patent Laid-Open PublicationNo. 8-21875, the description thereof will be omitted here. Further, in the present invention, it is possible to use the character card formed with a pattern on the surface according to the identifying information optically identifiable. Hereinafter, a description will be made assuming that the character card is a non-contact IC card.

The support card is a card, which exists as data and is displayed as an image in a display (first display 11). The support card includes, for example, a defensive system support card, a move system support card, an attack system support card, a recovery system support card, and the like, and is distributed 25 sheets each to each player at the game starting time.

The support card has a function of giving a predetermined effect to the character or the game content while in use during the game. Specifically, the protection system support card is a card having functions to raise the defensive power and the attack evade rate, and the like of the ally, and to lower the attack power, the attack hitting probability, the probability of giving an additional damage (hereinafter referred to as critical hitting probability) and the like of the enemy. The move system support card is a card having functions to raise locomotive faculty of the ally character, and to lower locomotive faculty of the enemy character. The attack system support card is a card having functions to raise the attack power, the attack hitting probability, and the critical hitting probability, and the like of the ally, and to lower the defensive power, the attack evade rate, and the like of the enemy. The recovery system support card is a card having a function to recover damage suffered by the ally character and exhausted action points (for example, a magic power, a skill point, and the like).

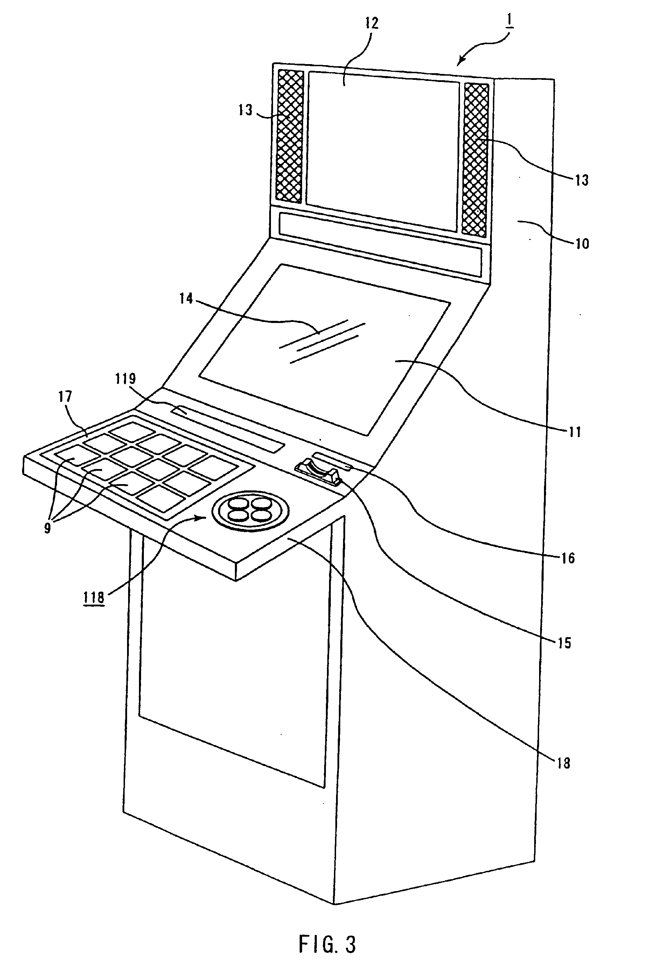

As shown in Fig. 3, the terminal 1 comprises: a cabinet 10; a first display 11 provided in the front of the cabinet 10 to slant at a predetermined angle; and a second display 12 provided above the first display 11.

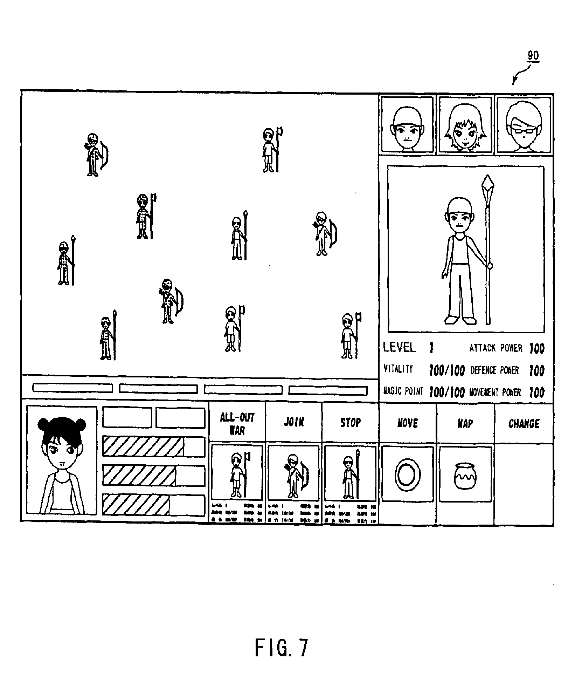

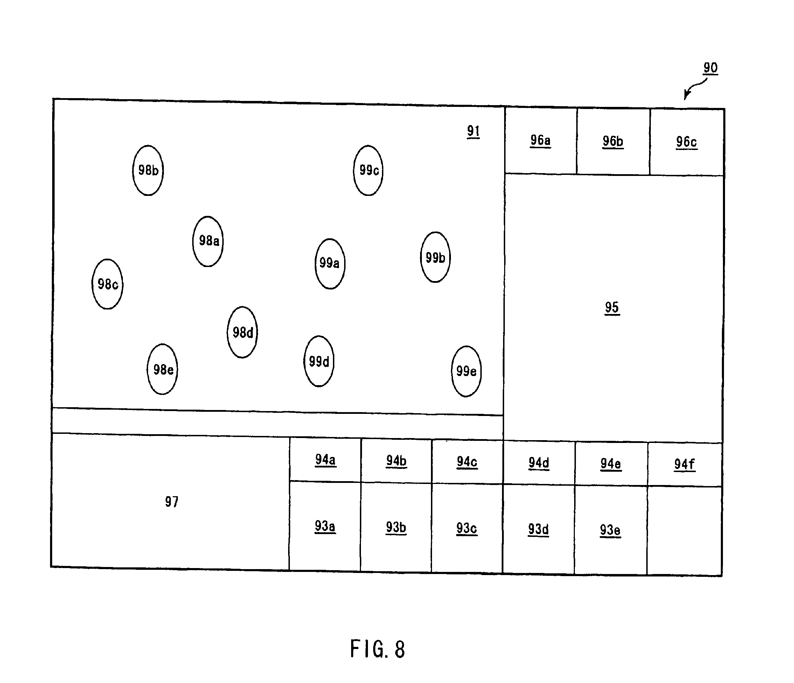

The first display 11 is displayed with a game image including a play field image showing a play field disposed with characters and card images (see Figs. 7 and 8).

The second display 12 is displayed with a fighting image showing the fighting state when the fighting between the characters is performed.

In the present embodiment, the first display 11 and the second display 12 are equivalent to the display means provided in each of the terminal 1.

The first display 11 has a first display area in which a game area image (play field image) representing the game area (play field) disposed with the characters is displayed.

The second display 12 has a second display area displaying a fighting image representing the fighting between the characters when the fighting between the characters is performed in the game area (play field).

In this manner, in the present invention, the display means provided in each of the terminal is not necessary one display (display device), but similarly to the game system according to the present embodiment, may be two displays, and the number thereof is not particularly limited.

Further, though the game system according to the present embodiment is constituted such that, among from two displays as the display means, one display (first display 11) has a first display area, and the remaining display (second display 12) has a second display area, the present invention is not limited to this example, and for example, the display area owned by one display is split into a plurality of areas, and one of the split areas may be made as a first display area, and the remaining one split area or plural areas may be made as a second display area.

In front of the first display 11, which is the display means having the first display area, a touch panel 14 is provided. The touch panel 14 can detect a touch by the player, and outputs a detection signal showing a touched position when detecting the touch to an operation input portion 114 (not shown) to be described later. The player can input various types of instructions by touching the touch panel 14. Both the left and right sides of the second display panel 12 are provided with a speaker 13, which outputs sounds.

Below the first display 11, there are provided a seven segment indicator 119, a coin insertion slot 15 inputted with a coin, and an ID card loading slot 16 to be inserted with an ID card. The seven segment indicator 119 is displayed with arrangement points. The arrangement points are set for each player, and when character cards 9 are mounted on a mounting panel 17 to be described later, the arrangement points are reduced by the points set in advance for each character card 9.

In case the arrangement points are reduced to 0 point, no more new character card can be mounted on the mounting panel 17 to be used for the game. The coin inputted to the coin insertion slot 15 is detected by a coin sensor 115 (not shown) . Further, the ID card loaded into the ID card loading slot 16 has its ID data read by an ID card reader 116 (not shown). The ID data reader 116 functions as acquiring means for acquiring the ID data as player identifying information.

The cabinet 10 is provided with an control board 18 protruding in front, and on the upper surface of the control board 18, there is provided the mounting panel 17 which can be mounted with a plurality of character cards 9.

Inside the control board 18, there is provided a character card reader 117 (not shown), and the character card reader 17 can read identifying information from the character cards 9 mounted on the mounting panel 17.

Further, on the upper surface of the control board 18, there are provided a plurality of operating switches 118. The player can operate the operating switches 118 to input predetermined instructions.

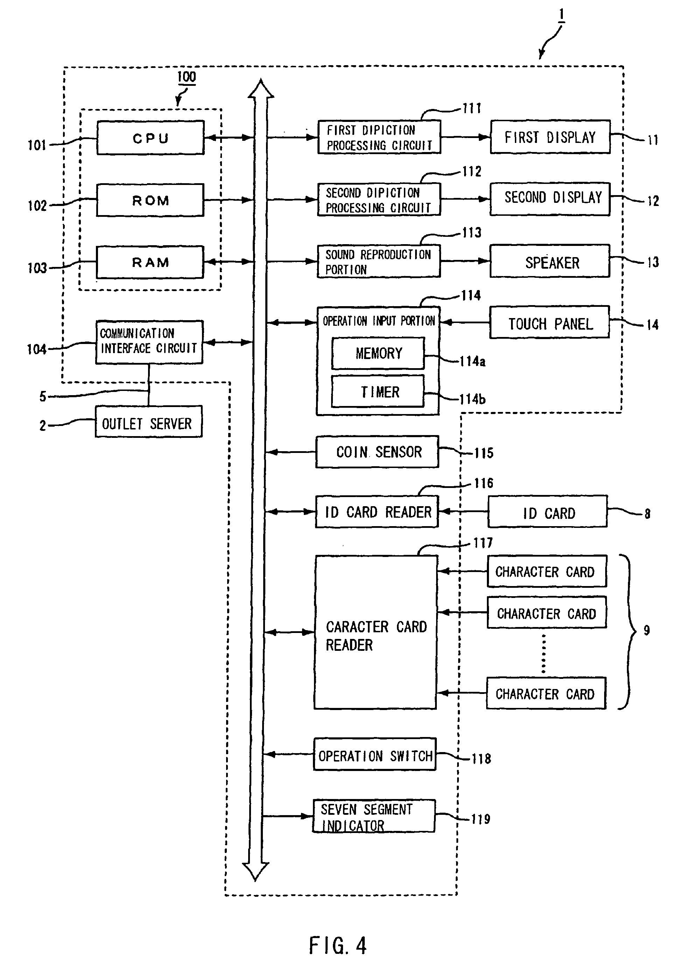

Fig. 4 is a block diagram showing a hardware structure of the terminal.

A control portion 100 controls the whole operation of the terminal 1, and comprises a CPU 101, a ROM 102, and a RAM 103.

The ROM 102 stores various types of image data and game programs, and the like.

That is, the ROM 102 stores, for example, image data representing various types of images constituting the game images displayed in the first display 11 such as an ally character image showing a character operable by a player, an enemy character image operated by the player who is a fighting partner, a play field image disposed with the ally character image and the enemy character image, a button image representing a button which accepts a predetermined instruction, a character card image representing the character card, a support card image representing the support card, and a character image representing a character corresponding to the character card and the like.

Further, the ROM 102 stores, for example, an object constituting the ally character, an object constituting the enemy character, a texture data, and a background image, and the like. The object and the like constituting the ally character or the enemy character are constituted by a predetermined number of polygons so as to be able to depict three-dimensional images.

In this manner, the ROM 102 stores various types of image data and the like for displaying the play field image in the first display 11 as display means having the first display area, and various types of the image data and the like for displaying the fighting image in the second display 12 as the display means having the second display area.

In the present embodiment, though a case will be described, where these image data and the like are stored by the ROM 102 in advance, the present invention is not limited to this example, and for example, the image data and the like as described above are kept stored in the ROM 202 of the outlet server 2, and in a predetermined timing (for example, a timing for starting the game, a timing in which other image data and the like are required, and the like), the image data and the like may be transmitted to the terminal 1. In this case, the image data and the like as described above are stored in the RAM 103 of the terminal 1.

The ROM 102 maybe a storage mediumbuilt-into the terminal 1 or a detachably attachable storage medium. Further, the ROM 102 may be constituted by both of the medium.

Further, among various data stored in the ROM 102, the data which can be stored in the detachably attachable recording medium may be made readable by driver, for example, such as, a hard disc drive, an optical disc drive, a flexible disc drive, a silicon disc drive, a cassette medium reading machine, and the like. In this case, the recording medium is, for example, a hard disc, an optical disc, a flexible disc, CD, DVD, a semiconductor memory, and the like.

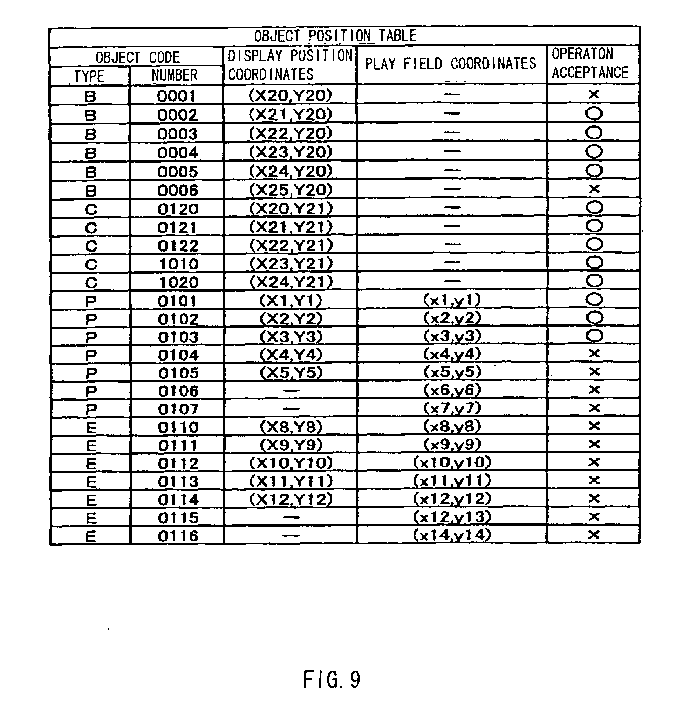

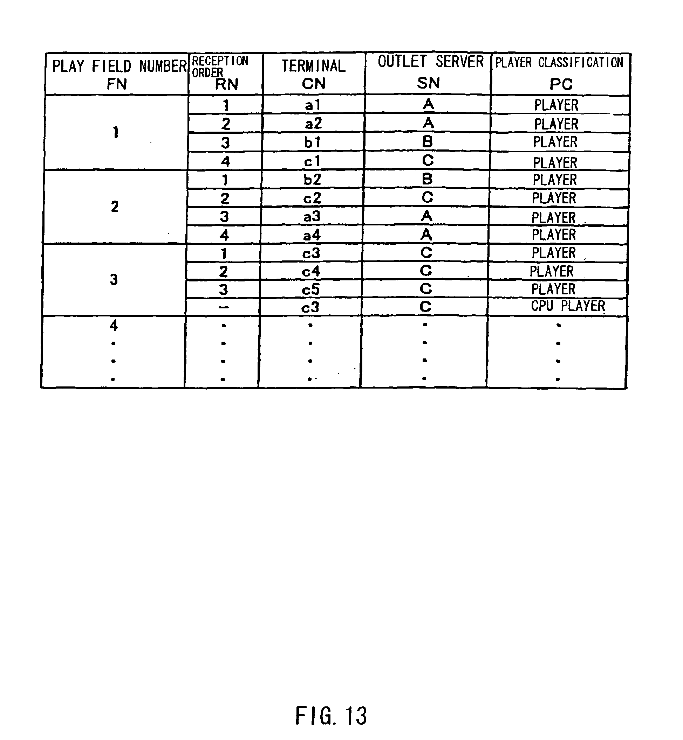

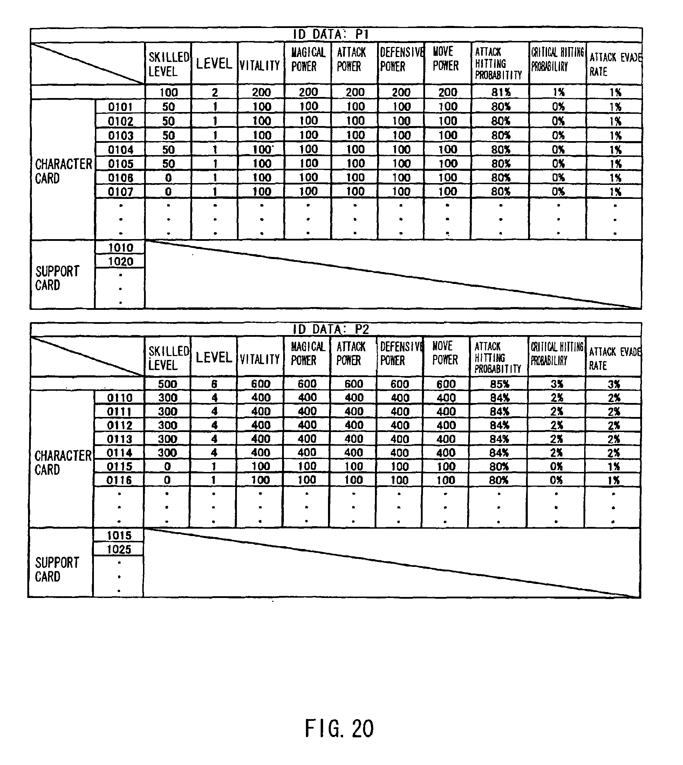

The RAM 103 temporarily stores information in process, variables, and the like. For example, it stores object position information (see Fig. 9), player participation information (see Fig. 13), player information (see Fig. 20), and the like. The object position information is a data stored in the object position table shown in Fig. 9, which includes display position coordinates of the image displayed in the first display 11, the coordinates of the character image disposed in the play field (play field coordinates), and advisability of the operation input for each image through the touch panel 14.

The play filed coordinates of the character image included in the object position information are equivalent to the position data representing the position of the character on the play field. In the game system according to the present embodiment, the RAM 103 of the terminal 1 functions as the position data storage means for storing the position data representing the position of the character on the play field.

A communication interface circuit 104 performs the transmission and reception between an outlet server 2 and the data (for example, the object position information, the player information, and the like) through a private line 5.

The communication interface circuit 104 transmits an operation command inputted from the operation input portion 114 according to the instructions inputted by the player through the touch panel 14 to the outlet server 2 through the private line 5, and the outlet server 2 allows the game to precede based on the operation command.

Further, the communication interface circuit 104 receives a display command for the first display 11 or the second display 12 from the outlet server 2 through the private line 5. Based on the display command, the game image including play field image is displayed on the first display 11, and the fighting image is displayed on the second display 12.

A first depiction processing portion 111 allows the game image including the play field image and the card image to be displayed in the first display 11, and comprises a VDP (Video data Processor), a video RAM, and the like. In the game system according to the present embodiment, the first depiction processing portion 111 functions as the first display control means.

The first depiction processing portion 111, according to the display command, refers to the object position information (see Fig. 9) and the player information (see Fig. 20) stored in the RAM 103, and extracts the image data from the ROM 102.

Then, according to the priority shown in the first display 11 (for example, the play field image, the character image, the button image, the card image in that order), the image data is stored in the video RAM, thereby generating a game image and outputting it to the first display 11. As a result, the first display 11 is displayed with the game image (Figs. 7 and 8) .

A second depiction processing portion 112 allows the fighting image showing the fighting between the ally and the enemy to be displayed in the first display 12, and comprises the VDP (Video data Processor), the video RAM, and the like. In the game system according to the present embodiment, the second depiction processing portion 112 functions as the second display control means.

The second depiction processing portion 112, according to the display command, performs a calculation, a light source computation process, and the like for converting the object (for example, the object constituting the ally character, the object constituting the enemy character, and the like) stored in the ROM 102 from the position on a three dimensional space to the position on a pseudo three dimensional space, and at the same time, based on the calculation result, performs a write processing (for example, a mapping and the like of the texture data for the region of the video RAM designated by polygon) of the image data to be depicted for the video RAM, thereby generating a fighting image and outputting it to the display 12. As a result, the second display 12 is displayed with the fighting image.

A sound reproduction portion 113, according to the instruction from the outlet server 2, outputs predetermined sounds, BGM, and the like from a speaker 12.

The touch panel 14 is a rectangular thin layer material provided in front of the first display, and is constituted such that a pressure sensitive raw material comprising a linear transparent material with predetermined pitches in every direction is disposed and coated by a transparent cover or the like. This touch panel 14 can adopt a conventionally known panel. The touch panel 14 outputs a detection signal showing a touched position when touched to the operation input portion 114.

The operation input portion 114 is a micro-computer comprising a memory 114a and a timer 114b, and buffers a touch position as a data, which is shown by the detection signal outputted from the touch panel 14 in the predetermined region of the memory 114a, and subsequently determines the instructed content based on the data by using the timer 114b and the like, and provides the determined result to the control portion 100 as an operation command. In this manner, the memory 114a of the operation input portion 114 is buffered with the detection signal as a data, and therefore, even when the operation input portion 114 is, for example, inputted with instructions for a plurality of character images instantaneously by the touch panel 14, the processings according to the instructions can be executed simultaneously or in parallel. Further, the predetermined region of the memory 114a provided in the operation input portion 114 is stored with an object position table which stores the object position information relative to the object (image possible to become an operation object by the touch panel 14) displayed in the first display 11 (See Fig. 9). The object position table is referred to when the operation input portion 114 determines the instruction content, and is renewed in sync whenever the obj ect position information stored in the RAM 103 is renewed.

The coin sensor 115, when detecting the coin inputted from the coin insertion slot 15, transmits a predetermined signal to the control portion 100. The ID card reader 116 reads an ID code from the ID card 8 loaded into the ID card loading slot 16, and supplies it to the control portion 100.

The character card reader 117 reads identifying information from the character card 9 mounted on the mounting panel 17, and supplies it to the control portion 100.

The operation switch 118 supplies a predetermined signal to the control portion 100 when operated by the player. The seven segment indicator 119 is displayed with the arrangement points.

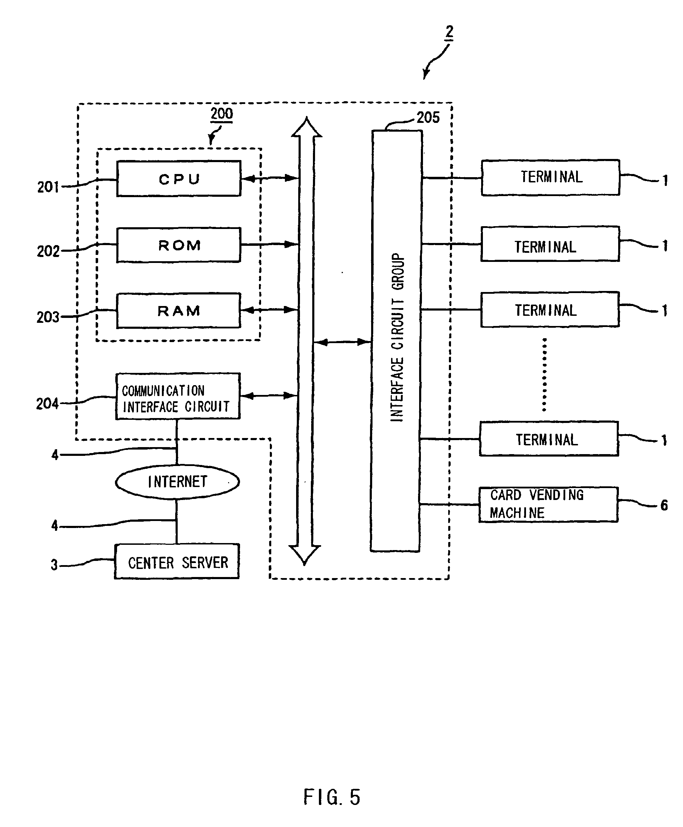

Fig. 5 is a block diagram showing a hardware structure of the outlet server.

The outlet server 2 comprises a control portion 200 for controlling the whole operation of the outlet server 2. The control portion 200 comprises a CPU 201, a ROM 202, and a RAM 203.

The ROM 202 stores a game proceeding control program. The CPU 201 of the outlet server 2 executes the game control program stored in the ROM 202, and performs a processing of the preceding of the game.

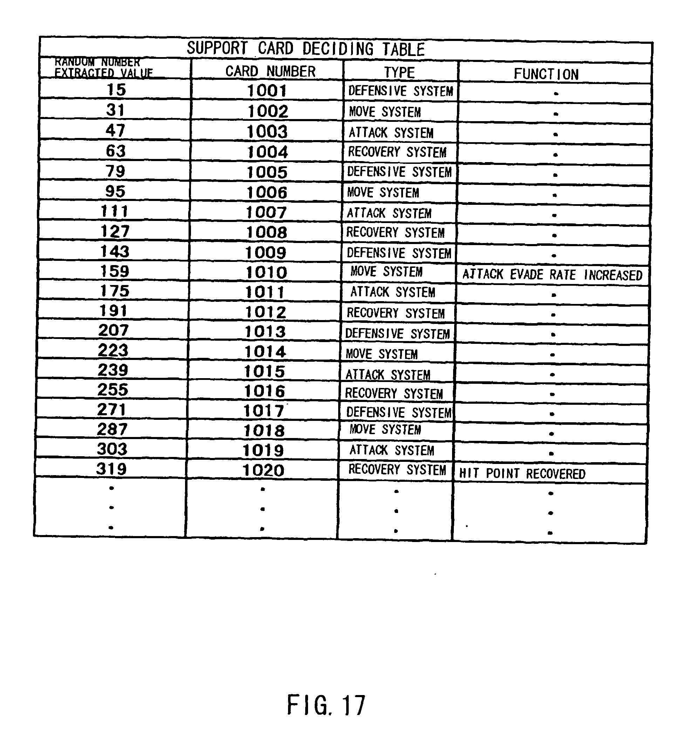

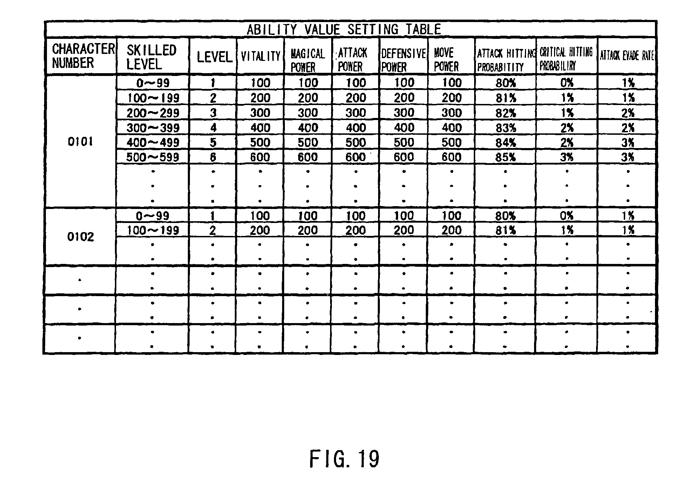

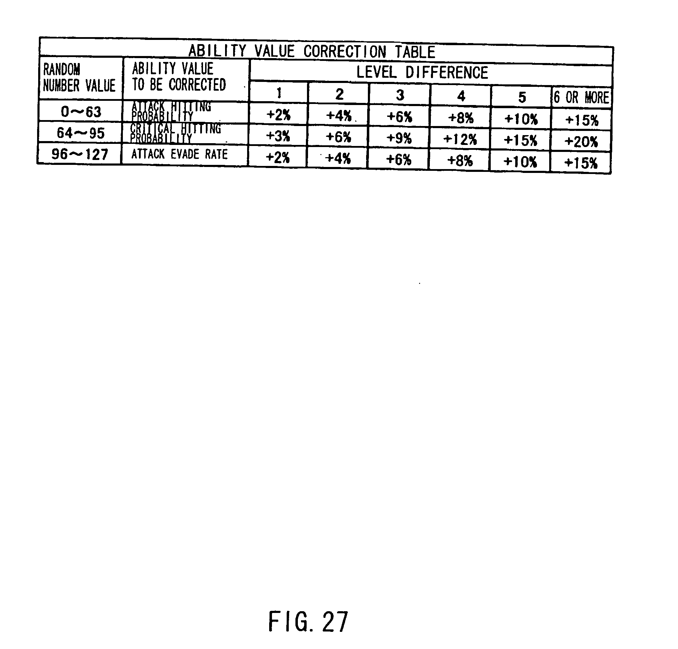

Further, the ROM 202 stores a character specific table (not shown) in which associated with the identifying information owned by the character card and the character appearing on the scene are associated, a support card determine table (see Fig. 17) referred to when the support card to be distributed to eachplayer is decided, an ability value setting table (see Fig. 19) referred to when the ability value of each character is set based on the historical data, an ability value correction table (see Fig. 27) for correcting the abilityvalue of the character when the fighting is performed between the characters, and the like.

The ROM 202 may be a storage mediumbuilt-into the terminal 1 or a detachably attachable storage medium. Further, the ROM 202 may be constituted by both of the medium.

Further, among various data stored in the ROM 202, the data which can be stored in the detachably attachable recording medium may be made readable by driver, for example, such as, a hard disc drive, an optical disc drive, a flexible disc drive, a silicon disc drive, a cassette medium reading machine, and the like. In this case, the recording medium is, for example, a hard disc, an optical disc, a flexible disc, CD, DVD, a semiconductor memory, and the like.

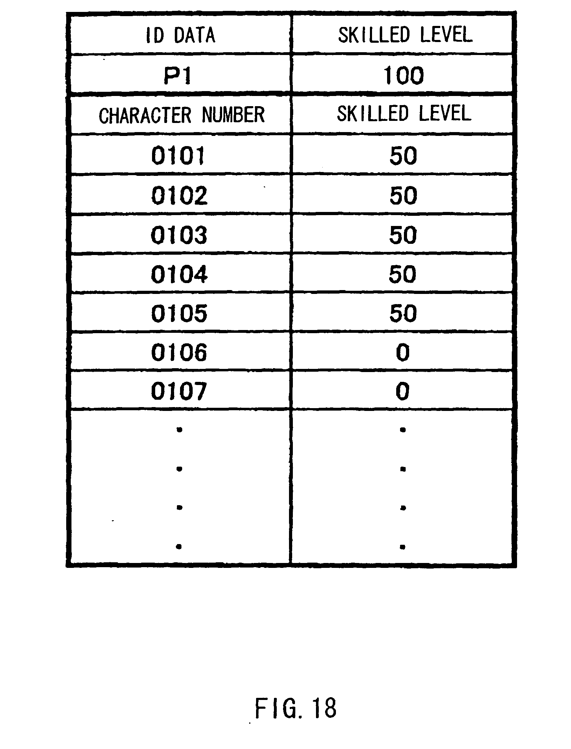

The RAM 203 temporarily stores information in process, variables, and the like. For example, the object position information (see Fig. 9) in each of the terminal 1 stores the player participation information (see Fig. 13), the player information (see Fig. 20) including the level of each player or the character operated by each player, and the like. Further, when the historical data (see Fig. 18) of the player is supplied from the center server 3, the RAM 203 stores this historical data. This historical data shows the skilled level of each player or the character operated by each player. The skilled level is raised when the fighting with other characters scores victory or a predetermined result is attained on the game.

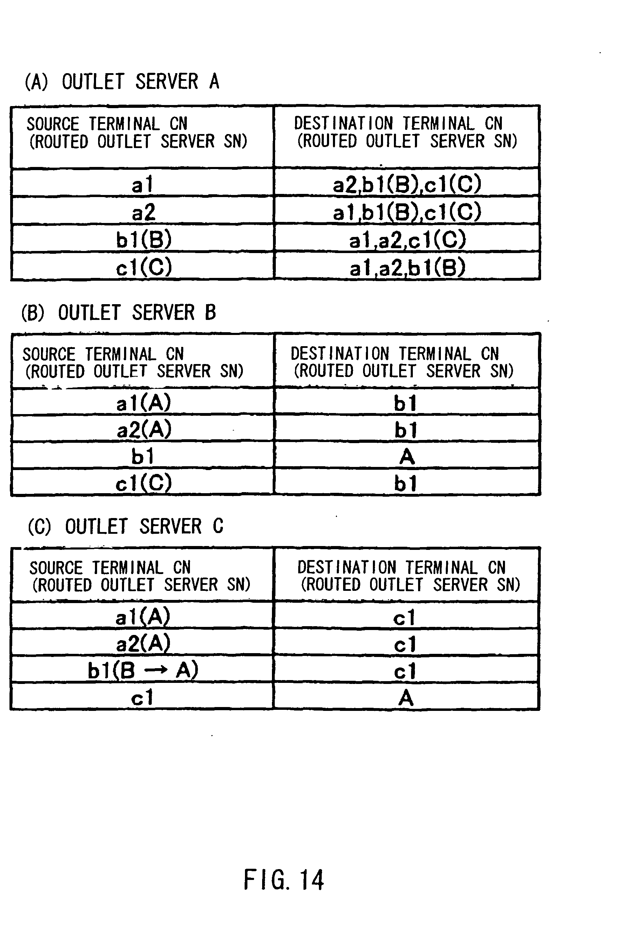

In the game system according to the present embodiment, the RAM 203 of the outlet server 2 functions as the position data storage means for storing the position data representing the position of the character on the play field. In this manner, in the game system according to the present embodiment, though the RAM 103 of the terminal 1 and the RAM 203 of the outlet server 2 function as the position data storage means for storing the position data representing the position of the character on the play field, while the game proceeds, the transmission of the data between the outlet server 2 and the terminal 1 is performed, and its time synchronization is controlled, and therefore, the RAM 203 of the outlet server 2 and the RAM 103 of the terminal 1 are always stored with the same position data. Incidentally, the transmission of the data between the outlet server 2 and the terminal 1 will be described later by using Fig. 14.

A communication interface circuit 204 transmits and receives various data to and from the center server 3 and other outlet servers 2 through a network comprising an Internet and the like.

Further, the outlet server 2 comprises an interface circuit group 205, and is connected to a plurality (eight sets here) of terminal 1 and one set of the card vending machine 6 by the interface circuit group 205 through the private line 5.

The CPU 201 of the outlet server 2, by executing the game control program stored in the ROM 202, functions as the position renewal means for renewing the position data stored in the RAM 203 as the position data storing means based on the input operation by the touch panel 14 by each player. Then, the transmission of the data between the outlet server 2 and the terminal 1 is performed, and its time synchronization is controlled, so that the same position data as the position data stored in the RAM 203 of the renewed outlet server 2 is stored in the RAM 103 of the terminal 1.

In the game system according to the present embodiment, though a case will be described, in which the RAM 103 of the terminal 1 and the RAM 203 of the outlet server 2 function as the position data storage means, and the CPU 201 of the outlet server 2 functions as the position renewal means, the present invention is not limited to this example. For example, the RAM 203 only of the outlet server 2 may function as the position data storage means. Further, the RAM 103 of the terminal 1 may function as the position data storage means, and at the same time, the CPU 101 of the terminal 1 may function as the position renewal means.

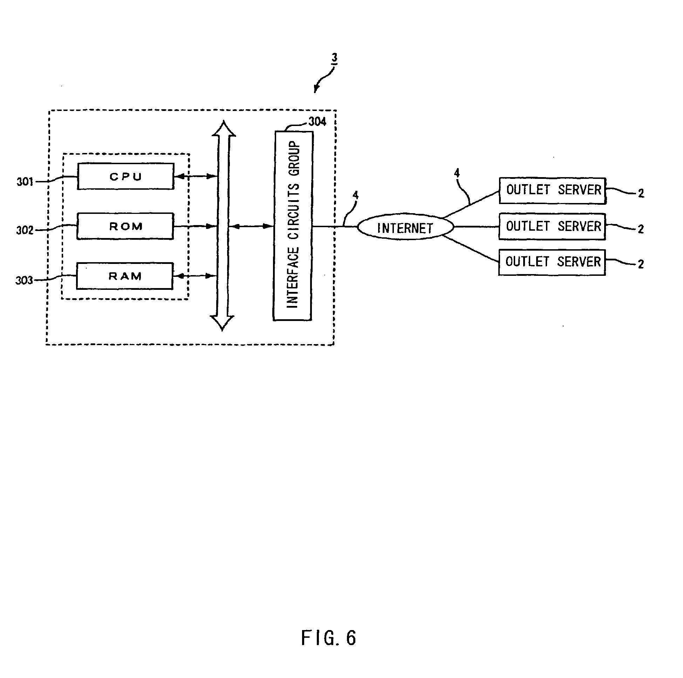

Fig. 6 is a block diagram showing the hardware structure of the center server.

The center server 3 comprises a control portion 300 for controlling the whole operation of the center server 3. The control portion 300 comprises the CPU 301, a ROM 302, and a RAM 303.

The ROM 102 maybe a storage mediumbuilt-into the terminal 1 or a detachably attachable storage medium. Further, the ROM 102 may be constituted by both of the medium.

Further, among various data stored in the ROM 302, the data which can be stored in the detachably attachable recording medium may be made readable by driver, for example, such as, a hard disc drive, an optical disc drive, a flexible disc drive, a silicon disc drive, a cassette medium reading machine, and the like. In this case, the recording medium is, for example, a hard disc, an optical disc, a flexible disc, CD, DVD, a semiconductor memory, and the like.

The RAM 303 stores, for example, the ID data of each player, the historical data (see Fig. 18) and the like.

The communication interface circuit 304 transmits and receives various data to and from a plurality of outlet servers 2 through the network comprising an Internet and the like.

FIG. 7 is a view showing one example of the game image displayed in the first display of the terminal, and Fig. 8 is a view for explaining about each image included in the game image shown in Fig. 7.

On the left above of a game image 90 displayed in the first display 11, there is disposed a play field image 91. The play field image 91 is an image showing a part of the play field, and is scroll-shown according to the preceding state (for example, the move of the character and the like) of the game. The play field image 91 is disposed with five ally character images 98a to 98e and five enemy character images 99a to 99e.

The character images 98 and 99 are images possible to become the operation objects by the player, and in the game system according to the present embodiment, by touching the character images 98 and 99 through the touch panel 14 (not shown), the operating instruction for the characters can be inputted.

On the left below the game image 90, there is disposed a status image 97 showing the level and ability value of the character operated by the player. On the right above of the game image 90, there are disposed fighting player images 96 showing the fighting players.

On the right below the game image 90, there are disposed five card images 93 (93a to 93e) side by side. The card images 93a to 93c are images (character card images) to show the character cards, and the cards 93d and 93e are images (support card images) to show the support cards.

Among the character cards mounted on the mounting panel 17 by the player and the support cards distributed to the player at the game starting time, five cards selected by lottery and the like are displayed as the card images 93a to 93e. The card image 93 is an image possible to become the operation object by the player, and in the game system according to the present embodiment, by touching the card image 93 through the touch panel 14 (not shown), the card can be used. When the card is used, the card image 93 disappears, and a new card is selected by the lottery and the like, and is displayed as the card image 93.

On the upper side of the card image 93, there are disposed six button images 94 (94a to 94f) side by side. The button image 94 is an image possible to become the operation object of the player, and in the game system according to the present embodiment, by touching the button image 94 through the touch panel 14 (not shown), varies instructions can be inputted.

For example, by operating the button image 94a [ALL-OUT WAR], the instruction to the effect that a full-scale attack be applied to united enemy characters by a plurality of ally characters can be inputted. By operating the button image 94b [JOIN], the instruction to the effect that a plurality of ally characters be joined together on one location can be inputted.

By operating the button image 94c [STOP], the instruction to the effect that the actions of a plurality of ally characters be all stopped can be inputted.

By operating the button image 94d [MOVE], the instruction to the effect that a plurality of ally characters be all moved can be inputted.

By operating the button image 94e [MAP], the instruction to the effect that an image showing the whole play field as the play field image 91 be displayed can be inputted.

By operating the button image 94f [CHANGE], the instruction to the effect that five sheets of the cards displayed as the card images 93 be exchanged with other cards can be inputted.

In this manner, while the game image 90 displayed in the first display 11 is disposed with various types of the images, among the various types of the images disposed in the game image 90, with respect to the image (object) possible to become the operation object by the touch panel 14, its displayposition and the like are controlled by the object position table shown in Fig. 9.

Fig. 9 is a view showing the object position table. This object position table is a table stored in the RAM 103 and the memory 114a of the terminal 1.

An object code is information intrinsic to each object, and comprises a type and a code. A type [B] is a button image, a type [C] is a card image, a type [P] is an ally character image, and a type [E] is an enemy character image.

Consequently, in the first display 11 or the play field of this terminal 1, there exist six button images corresponding to "B0001" to "B0006", five card images corresponding to "C0120" to "C0122", "C1010", and "C1020", seven ally character images corresponding to "P0101" to "P0107", and seven enemy character images corresponding to "E0110" to "E0116". Incidentally, the card image corresponding to the code in which the thousand's place is 0 is the character card image, and the card image corresponding to the code in which the thousand' s place is 1 is the support card image.

The display position coordinates are coordinates in the first display 11, and are set individually for every terminal 1, and are represented by XY coordinates.

Play field coordinates are coordinates in the play field expanding in the pseudo game space, and are commonly set within the terminal 1 playing the game in the same play field, and are represented by XY coordinates. The play field coordinates functions as the position data storage means for storing the position data representing the position of the character on the play field.

Similarly to the character images corresponding to "P0106" and "P0107", though the play field coordinates are set, those where the display position coordinates are not set are the images not displayed in the first display 11 in spite of existing on the play field.

Further, similarly to the button image corresponding to the type [B] or the card image corresponding to the type [C], the play field coordinates are set, but those where the display position coordinates are not set are the images not existing on the play field, though displayed in the first display 11.

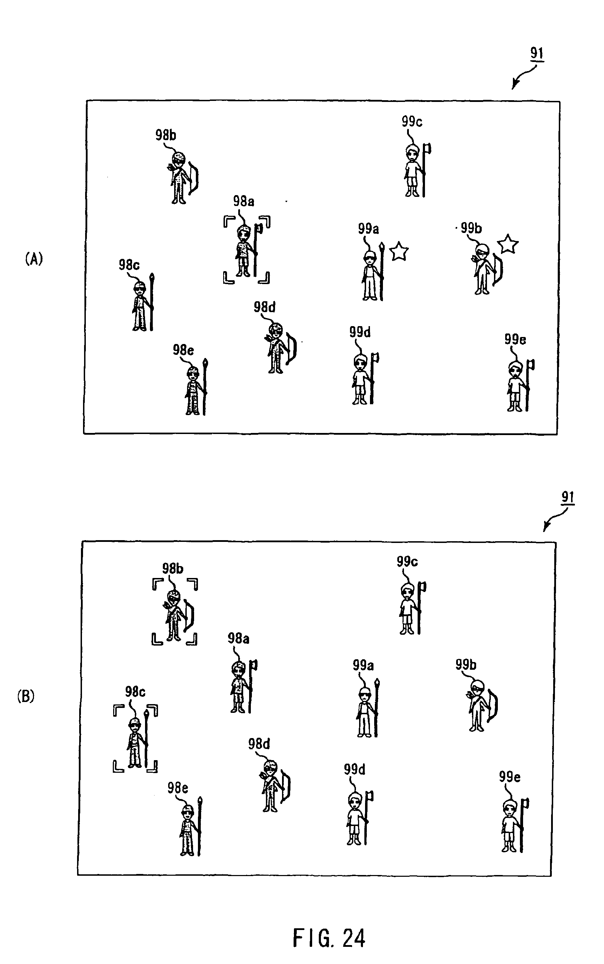

Acceptance or non-acceptance of the operation (acceptance is shown by ";" and non-acceptance by "x" in the figure) are set for every object in step S237 of the subroutine of Fig. 2 described later. The player touches the object of ";" for acceptance of the operation through the touch panel 14, thereby making it possible to input the instruction. While, even if the player touches the object of "x" for non-acceptance of the operation through the touch panel 14, no inputting of the instruction is possible. Since an operatable character (character image of ";" for acceptance of the operation) and a non-operatable character (character image of "x" for non-acceptance of the operation) are displayed in different modes in the first display 11 (for example, see Fig. 24), the player can easily recognize both of them and can suitably give an adequate instruction.

The object position table shown in Fig. 9 is stored in the predetermined region of the memory 114a provided in the operation input portion 114 of the terminal 1. The operation input portion 114 refers to this object position table, and determines the instruction content inputted through the touch panel 14.

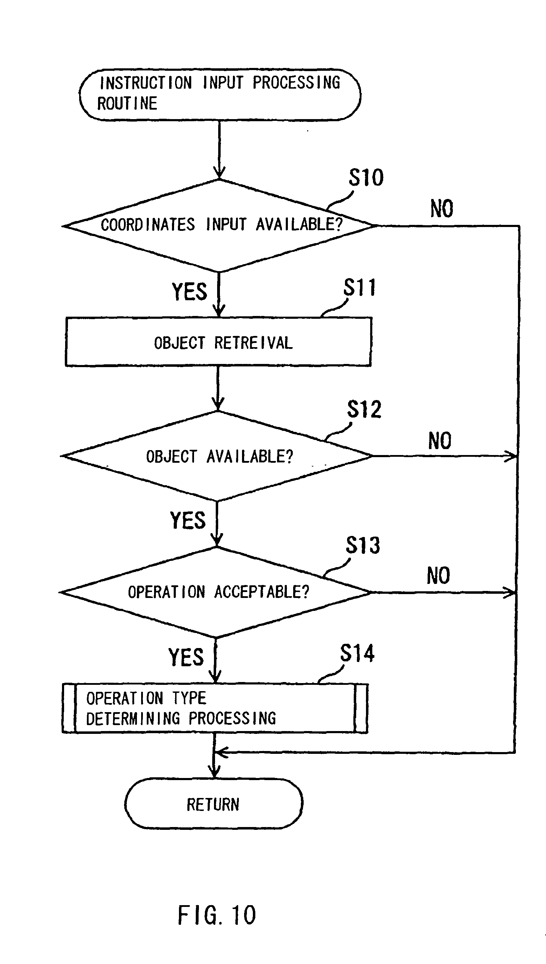

Next, the processing executed in the operation input portion 114 of the terminal 1 will be described by using Figs. 10 to 12.

Fig. 10 is a flowchart showing the subroutine of the operation input processing executed by the operation input portion 114. This subroutine is a subroutine called in a predetermined timing and executed by the operation input portion 114.

First, it is determined whether or not the operation input portion 114 has received a detection signal outputted from the touch panel 14, that is, whether or not the coordinates at the touched position have been inputted into the memory 114a as a data by the detection signal (step S10). When it is determined that the coordinates have not been inputted, the present routine ends.

In the meantime, in case it is determined that the coordinates have been inputted, the operation input portion 114 performs an object search (step S11). In this processing, the operation input portion 114, based on the inputted coordinates, refers to the object position table shown in Fig. 9, and retrieves the object corresponding to the input coordinates. Next, as a result of the object search, the operation input portion 114 determines whether or not there exists the corresponding object (step S12). Where there exists no corresponding object, the present subroutine ends. At this time, the coordinates of the detection signal stored in the memory 114a as a data are cleared.

In case there exists the corresponding object, the operation input portion 114 refers to the object position table shown in Fig. 9, and determines whether or not the object is unable to accept the operation (step S13). In case the object is unable to accept the operation, the present subroutine ends. In the meantime, in case the object can accept the operation, an operation type determination processing to be described later is performed (step S14), and the present subroutine ends.

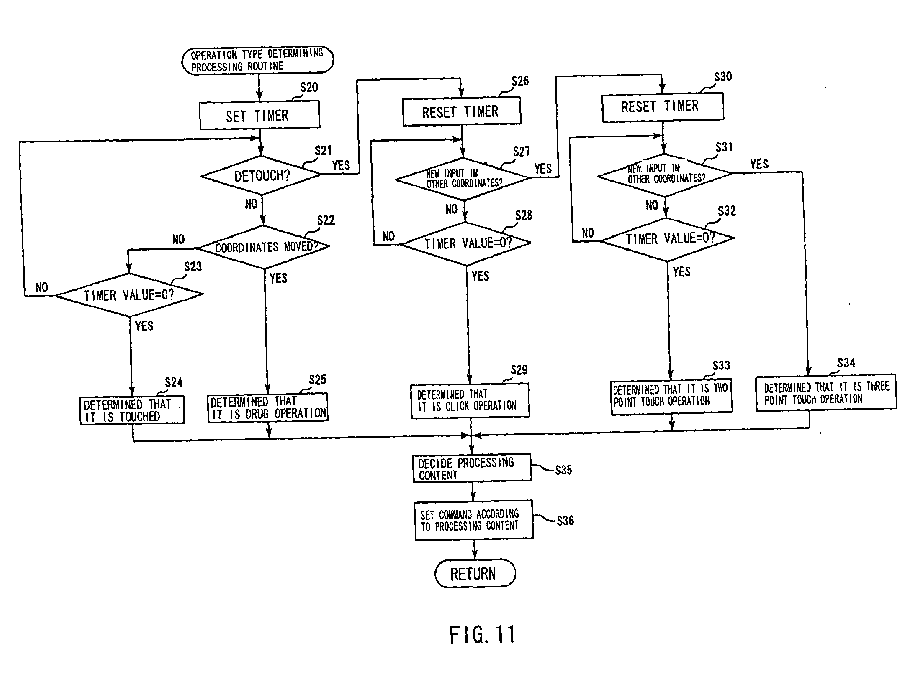

Fig. 11 is a flowchart showing the subroutine called and executed by step S14 of the subroutine shown in Fig. 10.

First, the operation input portion 114 sets a predetermined timer value to the timer 114b (step S20). This timer value, after being set, is subtracted in order at predetermined intervals.

Next, it is determined whether or not detouch (touching completed) has been made (step S21). In this processing, the operation input portion 114 determines that detouch has been made when the input of the detection signal from the touch panel 14 has ceased.

In case it is determined that there has been no detouch made, it is determined whether or not the input coordinates have moved (step S22). In this processing, the operation input portion 114 determines whether or not the touched positions shown by the detection signals from the touch panel 14 move in order.

In case it is determined that the touched positions do not move in order, it is determined whether or not the timer value has become 0 (step S23). In case it is determined that the timer value has become 0, the operation input portion 114 determines that the operation is a touch operation (operation touching the same position of the touch panel 14 for the predetermined period of time). In case it is determined that the time value does not become 0, the processing is returned to step S21. Further, in step S22, in case it is determined that the input coordinates move, the operation input portion 114 determines that the operation is a drag operation.

In step S21, in case it is determined that detouch has been made, the timer 114b is reset (step S26), and it is determined whether or not new inputs have been made into other coordinates (step S27). In case it is determined that no new inputs have been made in other coordinates, it is determined whether or not the timer value is 0 (step S28). In case it is determined that the time value is 0, the operation input portion 114 determines that the operation is a click operation (step S29). In case it is determined that the timer value is not 0, the processing is returned to step S27.

In step S27, in case it is determined that the new inputs have been made into other coordinates, the timer 114b is reset (step S30), and it is determined whether or not new inputs have been made into other coordinates (step S31).

In case it is determined that new inputs have been not made, it is determined whether or not the timer value is 0 (step S32). In case it is determined that the timer value is 0, the operation input portion 114 determines that the operation is a two point touch operation (step S33). In case it is determined that the timer value is not 0, the processing is returned to step S31.

In step S31, in case it is determined that new inputs have been made into other coordinates, the operation input portion 114 determines that the operation is a three point touch operation (step S34).

By executing the processings of steps S20 to S34, the operation input portion 114 can determine whether the operation corresponds to any of a click operation, a touch operation, a drag operation, a two point touch operation or a three point touch operation.

Next, the operation input portion 114, based on the types of the objects corresponding to the touched positions and based on the operation types, refers to the processing content determine table stored in the predetermined region of the memory 114a, and decides the processing content.

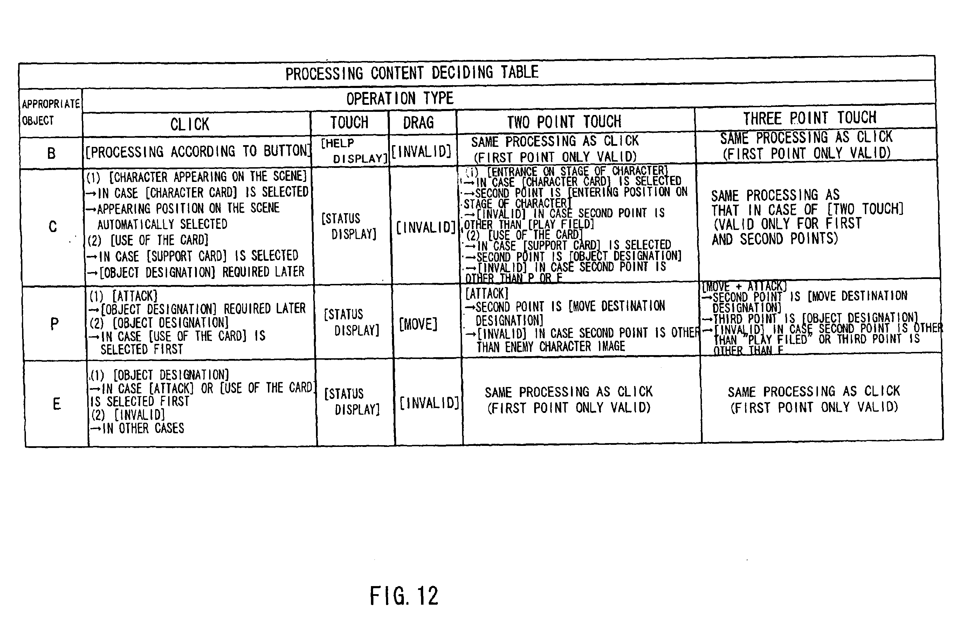

Fig. 12 is a view showing one example of the processing content determine table.

In case the object is B (button image), if the operation type is a [click], the processing content becomes [processing according to the button].

If the operation type is a [touch], the processing content becomes a [help display]. The [help display] is a display of the processing content performed according to the button.

In case the operation type is a [drag], that operation becomes invalid.

In case the operation type is a [two point touch] or [three point touch], the first point only becomes valid, and the same processing as the [click] is performed.

In case the object is C (card image), if the operation type is the [click] or the [two point touch], the processing content becomes an [entrance on the stage of the character] or a [use of the card]. Specifically, in case the character card is selected, the processing content becomes the [entrance on the stage of the character], and in this case, the entering position on the stage of the character is automatically selected by a computer. However, in the case of the [two point touch], the second point is appointed as the entering position on the state of the character, and if the second point is other than the play field, the operation becomes invalid.

In the meant time, in case the support card is selected, the processing content becomes the [use of the card]. In this case, the selection of the ally character image or the enemy character image which becomes the object of the [use of the cards] later is required. However, in the case of the [two point touch], the second point becomes an object designation, and in case the second point is other than the ally character image or the enemy character image, the operation becomes invalid.

If the operation type is the [touch], the processing content becomes a [status display]. The status display in the case of the object being C (card image) is a display of the characteristic or the function of the card. If the operation type is the [drag], the operation becomes invalid.

If the operation type is the [three point touch], the first and second points only become valid, and the same processing as the [two point touch] is performed.

In case the object is P (ally character image), if the operation type is the [click], the processing content becomes an [attack] or an [object designation]. Specifically, in case the [use of the card] is selected earlier, the processing content becomes the [object designation], and in other cases, the processing content becomes the [attack]. However, in case the processing content is the [attack], the [object designation] is required later.

If the operation type is the [touch], the processing content becomes the [status display]. The status display in the case of the object being P (ally character image) is a display of the external appearance and ability of the ally character.

If the operation type is the [drag], the processing content becomes the [move]. In this case, a drag destination is a move destination of the character image.

If the operation type is the [two point touch], the processing content becomes the [attack]. In this case, the second point becomes the object destination, and in case the second point is other than the enemy character image, the operation becomes invalid.

If the operation type is the [three point touch], the processing content becomes the [move + attack]. In this case, the second point becomes a move destination designation, and the third point becomes the object destination. In case the second point is other than the play field or the third point is E (enemy character image), the operation becomes invalid.

In this manner, in case the object is P (ally character image), and the operation type is the [drag], the [two point touch] or the [three point touch], the instruction to the effect that the character be moved is inputted.

In case the object is E (enemy character image), if the operation type is the [click], the processing content becomes the [object destination] or the [invalid]. Specifically, in case the [attack] or the [use of the card] is selected earlier, the processing content becomes the [object designation], and in other cases, the processing content becomes the [invalid] .

If the operation type is the [touch], the processing content becomes the [status display]. The status display in the case of the object being E (enemy character image) is a display of the external appearance, ability and the like of the enemy character.

In case the operation type is the [drag], the processing content becomes [invalid].

If the operation type is the [two point touch] or the [three point touch], the first point alone is valid, and the same processing as the [click] is performed.

After having performed the processing of step S35, the operation input portion 114 sets the operation command corresponding to the processing content to the RAM 103.

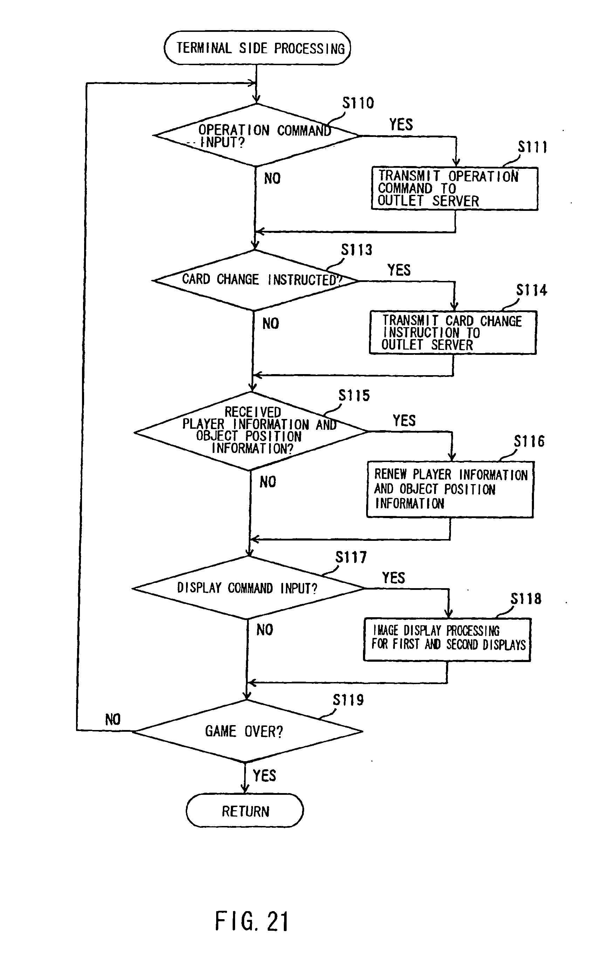

This operation command is transmitted from the terminal 1 to the outlet server 2 in a predetermined timing (see Fig. 21, step S111).

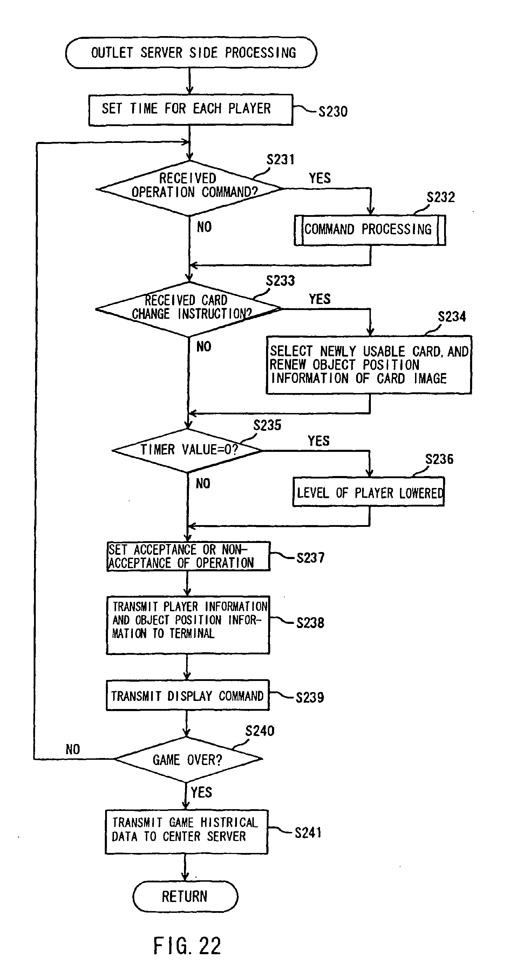

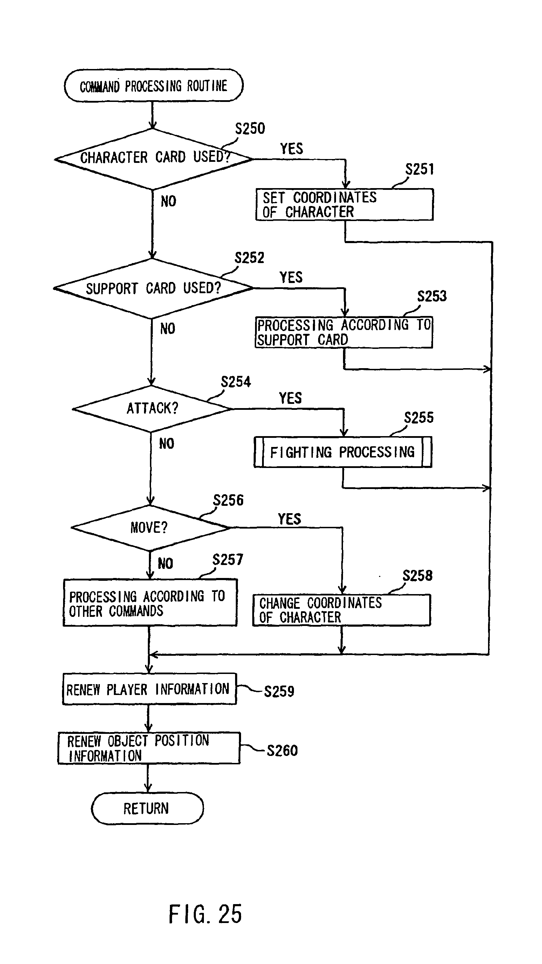

The outlet server 2, based on the operation command, performs, for example, processing relative to the preceding of the game such as the renewal of the object position information and the like (see Figs. 22 and 25), and based on the processing result, transmits a display command to the terminal 1. The first depiction processing portion 111 of the terminal 1, based on the display command, displays the game image including the play field image and the card image in the first display 11.

Next, in case the games are played in the same play field for every four terminal 1, the player participation information stored in the RAM 203 of the outlet server 2 connected to each terminal through the private line 5 and the RAM 303 of the center server 3 will be described by using Fig. 13.

Fig. 13 is a view showing the player participation information.

From the left columns in order are stored the player field numbers (FN) which are the identifying numbers of the player fields given for every player field in conformity with a predetermined rule when the player fields are prepared by the center server 3, receipt sequential numbers (RN) which are the numbers sequentially given when received by the center server 3, machine IDs (CN) which are the identifying information of the terminal 1, outlet server codes (SN) which are identifying numbers of the outlet servers 2, and player classification (PC) showing the classification of the players operating the terminal 1.

The player classification (PC) is stored with [players] in case the terminal 1 is operated by human players, and in case the game is operated by CPU players, the [CPU players] are stored. Incidentally, in case the player classification of four players within the play field becomes all [CPUplayers] or no player exists, the player participation information relative to the play field is eliminated.

In the play fieldof the play fieldNo. 1, the participation in the game in order of terminal a1, terminal a2, terminal b1, and terminal c1 are received by the center server 3.

From the player participation information shown in Fig. 13, it is evident that the play field of the play field No. 1 is constituted by the terminal a1, a2, b1 and c1, and that the terminal a1 and a2 are connected to an outlet server A through the private line, and that the terminal a1, a2, b1, and c1 are operated by human players or the like. Incidentally, the player participation information relative to the play field number [1] shown in Fig. 13 is stored in the predetermined regions of the RAM 203 of the outlet servers A, B and C.

Fig. 14 relates to a game in the play field of the play field number [1], and is a view for explaining the content of the transmission and reception of the data by the outlet servers A, B and C. Tables (a), (b) and (c) are views for explaining the content of the processing by the outlet servers A, B and C, respectively. In the left column of the table are mentioned the machine ID (CN) of the terminal 1 which is the transmitting source of the data received by the outlet server 2 (outlet server A, B or C), and the outlet server code (SN) of the outlet server 2 passed though until received by the outlet server 2. In the right column of the table are mentioned the machine ID (CN) of the terminal 1 which is the transmitting destination of the data transmitted from the outlet server 2 (outlet server A, B or C), and the outlet server code (SN) of the outlet server 2 passed though until received by the terminal 1. Incidentally, the CPU 201 provided in the outlet servers A, B and C, when received the data transmitted from the terminal a1, a2, b1, and c1, renews various types of data stored in the predetermined region of the RAM 203.

The CPU 201 of the outlet server A, as located at the second row from the top of the table (a), receives the data from the terminal a1, and transmits it to the terminal a2 and the outlet servers B and C.

Then, the CPU 201 of the outlet server B, as located at the second row from the top of the table (b), receives the data from the terminal a1 via the outlet server A, and transmits it to the terminal b1. The CPU 201 of the outlet server C, as located at the second row from the top of the table (c), receives the data from the terminal a1 via the outlet server A and, transmits it to the terminal c1.

At the same time, the CPU 201 of the outlet server A, as located at the third row from the top of the table (a), receives the data from the terminal a2, and transmit it to the terminal a1 and the outlet servers B and C.

The CPU 201 of the outlet server B, as located at the third row from the top of the table (b), receives the data from the terminal a2 via the outlet server A, and transmits it to the terminal b1. The CPU 201 of the outlet server C, as located at the third row from the top of the table (c), receives the data from the terminal a2 via the outlet server A, and transmits it to the terminal c1.

The CPU 201 of the outlet server B, as located at the fourth row from the top of the table (b), receives the data from the terminal b1, and transmits it to the outlet server A. Then, the CPU 201 of the outlet server A, as located at the fourth row from the top of the table (a), receives the data from the terminal b1 via the outlet server B, and transmit it to the terminal a1 and a2 and the outlet server C. Then, the CPU 201 of the outlet server C, as located at the fourth row from the top of the table (c), receives the operation signal from the terminal b1 via the outlet servers B and A, and transmits it to the terminal c1.

Similarly, the CPU 201 of the outlet server C, as located at the fifth row from the top of the table(c), receives the data from the terminal c1, and transmit it to the outlet server A. The CPU 201 of the outlet server A, as located at the fifth row from the top of the table (a), receives the data from the terminal c1 via the outlet server C, and transmits it to the terminal a1 and a2 and the outlet server B. Then, the CPU 201 of the outlet server B, as located at the fifth row from the top of the table (b), receives the data from the terminal c1 via the outlet servers C and A, and transmits it to the terminal b1.

In this manner, the CPU 201, between the outlet servers A, B, and C, transmits the data from the terminal a1, a2, b1, and c1, so that, every time the data from the terminal a1, a2, b1, and c1 are received, various types of the data stored in the RAM 203 are renewed, and therefore, the terminal a1, a2, b1 and c1 allow the game to precede by using the data stored in the RAM 203, thereby making it possible to easily control a time synchronization (to make the game preceding status identical) in the preceding of the games between the terminal a1, a2, b1 and c1.

That is, the outlet server 2 (here, the outlet server A) initially receiving the participation in the game receives the data from the terminal 1 connected by the private line 5 and transmits it to all other terminal 1, and at the same time, and receives the data from the terminal 1 connected to another outlet server 2 (here, the outlet server B or C) by the private line 5 through another outlet server 2 (the outlet server B or C), and transmits it to all other terminal 1.

Further, another server 2 (the outlet server B or C) receives the data from the terminal 1 connected by the private line 5 via the outlet server 2 (the outlet server A), and transmits it to the terminal 1 connected by the private line 5.

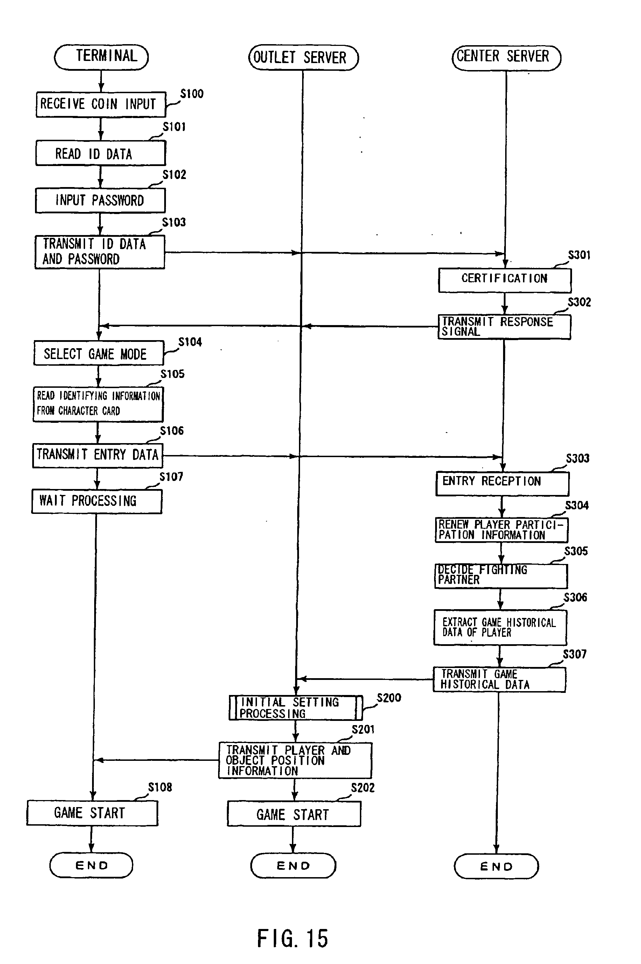

Fig. 15 is a flowchart showing the flow of the processing till the game starts in the terminal 1, the outlet server 2, and the center server 3.

First, the CPU 101 of the terminal 1 receives the input of a coin from the coin insertion slot 15 (step S100). In case the CPU 101, on occasion of detecting the coin, receives a predetermined signal outputted from the coin sensor 115, it reads the ID code of the player by the ID card reader 116 from the ID card 8 inserted into the ID card slot port 16 (step S101). The CPU 101 receives the input of a password by the operation of the player (step S102). Next, the CPU 101 transmits the read ID code to the center server 3 via the outlet server 2 through the private line 5 by the communication interface circuit 104 together with the password inputted by the operation of the player (step S103).

The CPU 301 of the center server 3 determines whether or not there is an ID code received from the terminal 1 in the ID codes stored in the RAM 303. When it is determined that there is an ID code, it is determined whether or not the password of the player stored in the RAM 303 in association with that ID code matches the password received from the terminal 1, thereby performing a certification (step S301). The CPU 301 transmits its result to the terminal 1 as a response signal.

In case the response signal is received from the center 3, the selection of the game mode is received (step S104). As the selection of the game mode, it is possible to make the selection of the play fields where the game is played, and the selection of the fighting parties (for example, the selection of whether or not the game is played by the players in the terminal 1 of the same outlet, the selection of whether or not the CPU players are allowed to participate, and the like).

Next, the CPU 101 reads the identifying information from the character card 9 mounted on the mounting panel 17 by the character card reader 117 (step S105). The CPU 101 transmits an entry data including the identifying information and the like which have been read to the center server 3 via the outlet server 2 (step S106).

In the meantime, the CPU 301 of the center server 3 receives the entry (step S303), and renews the player participation information shown in Fig. 13 (step S304).

Next, the CPU 301 decides the players (fighting parties) playing a game in the same play field (step S305). In case the human players are even less than four persons or the selection to the effect that the fighting be made with the computer in the game mode selection, the CPU players are set.

Next, the CPU 301 extracts the historical data of each player from the RAM 303 (step S306). Next, the CPU 301 transmits the extracted historical data to the outlet server 2 (step S307).

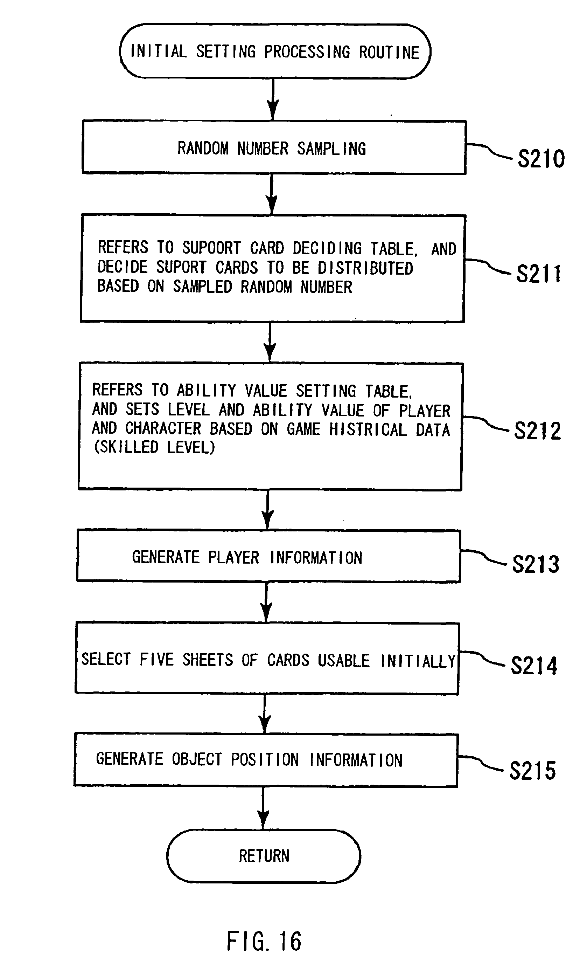

The outlet server 2, which receives each player's game historical data from the center server 3, performs an initial setting processing (step S200). In this initial setting processing, player information (see Fig. 20) including each player as well as the level and ability value of the character operated by each player and object position information (see Fig. 9) are generated. The initial setting processing will be described later in detail by using Fig. 16.

Next, the outlet server 2 transmits the generated player information and the obj ect information to the terminal 1, which perform the games in the same play field (step S201). After that, in the terminal 1 and the outlet server 2, the game is started, respectively (step S108 and S202).

As shown in Fig. 15, in the game played by the game system according to the present embodiment, each player can participate at his preferable time, and a plurality of players can participate in the preceding of the games in one play field. This is the characteristic of the real time strategy (RTS).

Fig. 16 is a flowchart showing the subroutine of the initial setting processing called and executed in step S200 of the flowchart shown in Fig 15 in the outlet server 2.

First, the CPU 201 of the outlet server 2 executes a random number generation program stored in the ROM 202, and performs the sampling of random numbers (step S210). The number of random numbers to be sampled is the number of support cards distributed to four players. For example, in case the support card is distributed 25 pieces each to each player, 100 pieces of random numbers are sampled.

Next, the CPU 201 refers to the support card determine table stored in the ROM 202, and based on the random number value sampled, decides the support card to be distributed to each player (step S211).

Fig. 17 is a view showing one sample of the support card determine table.

The left most column is stored with the random number extracted values, and the right column next to it is stored with card numbers, and each card number is associated with the type and function of the support card.

This support card determine table is a look-up table, and for example, if the random number extracted value is any of 0 to 15, the support card of "1001" is selected.

Next, the CPU 201 refers to the ability value setting table, and based on the game historical data (skill level), sets the level and the ability value with the player and the character (step S212). In the step S212, with regard to the four players playing the game in the same play field, the CPU 201 sets the level and the ability value with the player and the character operated by the player.

Fig. 18 is a view showing one example of the historical data.

The ID data is a data stored in the ID card 8 (not shown), and is a data allotted to every player by the center server 3 when the ID card 8 is sold from the card vending machine 6. The historical data shown in Fig. 18 is a historical data of the player "P1".

The column of the character number is stored with the character numbers of the characters used (operated) in the game by the player "P1".

The skill level is historical data in the present invention, and is set individually for the player and each character. The skill level is raised when the predetermined conditions (for example, winning a victory over the fighting between the characters, predetermined points being scored by players, and the like) are satisfied.

Fig. 19 is a view showing one example of the ability value setting table.

In the ability value setting table, the skill level, the level and the ability value are associated for each character. The ability value, as shown in Fig. 19, consists of plural items such as vitality (life force), magical power, attack power, defensive power, locomotive faculty, attack hitting probability, critical hitting probability, and attack evade rate.

Although not shown in the figure, in the ability value setting table, with regard to the players also, the skill level, the level and the ability value are associated.

The level shows the strength of the player or the character over the game by stages, and if it is the same player or character, higher the numerical value is, higher the ability value of the player or character is, and this implies that it is strong also over the game.

The vitality (life force) shows the remaining physical strength of the player or the character, which is reduced when suffering damage by the attack from the enemy character and the like. When the vitality (life force) of the player is reduced to 0, the game is over. Further, when the vitality (life force) of the ally character is reduced to 0, that character becomes extinct from the play field, and cannot be used in the game for the predetermined period of time.

The magical power is an action point required for performing a predetermined action (for using the magical power here) by the character. When the character uses the magical power, the magical power is reduced by a predetermined value according to the types of the magical power. The magical power is recovered with time at a predetermined speed in case it is reduced while in the fighting. The recovery speed of the magical power changes according to the player or the level of the character operated by the player.

The attack power is a power by which the character can give damage to another character, and higher the numerical value thereof is, greater the amount of damage is, which can be given to another character.

The defensive power is a power to defend an attack from another character, and higher the numerical value thereof is, damage suffered from the attack from another character can be reduced.

The locomotive faculty affects the movable distance on the play field and the frequency of actions by the character while in the fighting, and higher the numerical value thereof is, longer the distance is, in which the character can move on the play field, so that the frequency of actions while in the fighting is increased.

The attack hitting probability is a ratio that can allow an attack by the character to hit another character, and higher the numerical value thereof is, higher the probability is, which can allow the attack to hit.

The critical hitting probability is a ratio that can give additional damage when the character attacks another character, and higher the numerical value thereof is, higher the probability is, by which additional damage can be given.

The attack evade rate is a rate that evades an attack in case the character receives the attack from another character, and higher the numerical value thereof is, higher the probability is, by which the attack can be evaded.

After the processing of step S212, the CPU 201, based on the processing results of the step S211 and step S212, generates player information (step S213).

Fig. 20 is a view showing one example of the player information.

The upper side table shows the player information of the player "P1". The level and ability value of the player and each character set in step S212 are stored, and at the same time, the card numbers of a plurality (for example, 25 sheets) of support cards distributed in step S211 are stored.

Further, the lower side table shows the player information of the player "P2" . In the figure, while the player information only on two players is shown, in step S213, the player information on four players playing the game in the same play field is generated.

Next, the CPU 201 selects five sheets of the cards initially usably by lottery (step S214). The cards that are taken as usable are the cards displayed in the first display 11 of the terminal 1 as the card images 93a to 93e, and five sheets are selected from among the character cards and the support cards by lottery. In step S214, for the four players playing the game in the same play field, five sheets of the cards are selected that are taken as initially usable.

Next, the CPU 201 generates object position information shown in Fig. 9 (step S215). In this processing, the CPU 201 disposes the predetermined characters on the play field so as to set play field coordinates, and based on the play field coordinates, sets display position coordinates in each terminal 1. Further, based on the selection result in step S214, the CPU 201 sets the display position coordinates of the card image in each terminal 1. Further, it performs the setting processing and the like of the display position coordinates of the button image in each terminal 1.

As a result, the position data representing the position of the character on the play field is generated and stored in the RAM 203 of the outlet server 2.

After that, the present subroutine ends.

The object position information (see Fig. 9) generated in the subroutine shown in Fig. 16 and the player information (see Fig. 20) are transmitted to the terminal 1 in step S201 of the flowchart shown in Fig. 15. After that, while the game precedes, as described by using Fig. 14, the transmission of the data is performed between the outlet server 2 and four terminal 1, and its time synchronization is controlled, and therefore, the RAM 203 of the outlet server 2 and the RAM 103 of the four terminal 1 are always stored with the same object position information (which includes the play field coordinates of the character as the position data) and the player information.

Fig. 21 is a flowchart showing the outline of the processing executed in the terminal 1 while the game precedes.

First, the CPU 101 of the terminal 1 determines whether or not the operation command is inputted (step S110). The operation command, as described by using Figs. 10 to 12, is a command set to the RAM 103 by the operation input portion 114 according to the instruction inputted by the player through the touch panel 14, and in step S110, the CPU 101 determines whether or not the operation command is set to the RAM 103.

In case the operation command is inputted from the operation input portion 114, the CPU 101 transmits the operation command to the outlet server 2 by the communication interface circuit 104 through the private line 5 (step S111). This processing corresponds to the processing of step S231 of the flowchart shown in Fig. 22.

The outlet server 2 suitably receives the operation commands from four terminal 1, and based on the operation command, performs the processing of proceeding the game. Then, based on this processing result, the outlet server 2 transmits the display command to each terminal 1 for the first display 11 or the second display 12 (Fig. 22, step S238). Further, the outlet server 2, based on the processing result, renews the player information and the object position information, and transmits the player information and the object position information after the renewal to each terminal 1 (Fig. 22, step S239). The processing executed in the outlet server 2 will be described in detail later by using Fig. 22.

In case it is determined that the operation command is not inputted in step S110 or the processing of step S111 is executed, next, the CPU 101 determines whether or not a card change instruction is inputted (step S113). The card change instruction in this step S113 is an instruction to the effect that the card images 93a to 93e displayed in the first display 11 be changed, that is, the instruction to the effect that the usable card be changed. The card change instruction here is not the instruction to the effect thatmountedon the mounting panel 17bephysicallychanged (for example, removal, addition, and the like).

The card change instruction in step S113 can be inputted by touching a button image 94f [change] among the game images 90 displayed in the first display 11 through the touch panel 14 (see Figs. 7 and 8).

In case it is determined that the card change instruction is inputted, the CPU 101 transmits the card change instruction to the outlet server 2 through the private line 5 by the communication interface circuit 104 (step S114). In the meantime, the outlet server 2, based on the received card change instruction, newly selects a usable card, and renews the obj ect position information on the card image.

In case it is determined that the card change instruction is not inputted in step S113 or the processing of step S114 is executed, the CPU 101 determines whether or not the play information and the object position information is received from the outlet server 2 (step S115).

This processing correspond to the processing of step S238 of the flowchart shown in Fig. 22. In this processing, the CPU 101 determines whether or not the transmission of the data (the player information and the object position information) between the outlet server 2 described by using Fig. 14 and the four terminal 1 is performed.

In case it is determined that the player information and the object position information are received from the outlet server 2, the CPU 101 renews the player information and the object position information stored in the RAM 103 (step S116). As a result, the player information and the object position information stored in the RAM 103 of the terminal 1 are synchronized in time with the player information and the object position information stored in the RAM 203 of the outlet server 2. Incidentally, in case the object position information stored in the RAM 103 is renewed, the object position information stored in the memory 114a of the operation input portion 114 is also renewed.

In step S115, in case it is determined that the player information and the object position information are not received from the outlet server 2 or the processing of step S116 is executed, the CPU 101 determines whether or not the display command is received from the outlet server 2 (step S117). This processing corresponds to the processing of step S239 of the flowchart shown in Fig. 22.

In case it is determined that the display command is received, the CPU 101 performs the image display processing for the first display 11 and the second display 12 (step S118). In this processing, the CPU 101 supplies the display command to the first depiction processing portion 111 or the second depiction processing portion 112. The first depiction processing portion 111, according to the display command, refers to the object position information (see Fig. 9) and the player information (see Fig. 20) stored in the RAM 103, and extracts the image data from the ROM 102. Then, according to the priority displayed in the first display 11 (for example, the play field image, the character image, the button image, and the card image in that order), the image data is stored in the video RAM to generate a game image, and the game image is outputted to the first display 11. As a result, the first display 11 is displayed with the game image (see Figs. 7 and 8). At this time, the first depiction processing portion 111 functions as the first display control means for displaying the play field image where the characters are shrunk and disposed on the play filed based on the position data stored in the RAM 103 as the position data storage means in the first display 11 as the display means having the first display area. Incidentally, in the present invention, the shrinkage of the character is referred to as the display in the first display area of the character image smaller than the character image included in the fighting image displayed in the second display area.

Further, according to the display command, the second depiction processing portion 112 performs a calculation, a light source computation process, and the like for converting the object (for example, the object constituting the ally character, the object constituting the enemy character, and the like) stored in the ROM 102 from the position on a three dimensional space to the position on a pseudo three dimensional space, and at the same time, based on the calculation result, performs a write processing (for example, a mapping and the like of the texture data for the region of the video RAM designated by polygon) of the image data to be depicted for the video RAM, thereby generating a fighting image and outputting it to the display 12. As a result, the second display 12 is displayed with the fighting image. At this time, the second depiction processing portion 112 functions as the second display control means for displaying the fighting image representing the fighting between the characters performed on the play field in the second display 12 as the display means having the second display area.

In step S117, in case it is determined that the display command is not received or the processing of step S118 is executed, the CPU 101 determines whether or not the game is completed (the game is over) (step S119). In this processing, the CPU 101 determines the game is completed when the fighting by four players in the play field is completed, when the player operating this terminal 1 loses in the game or when an instruction to the effect that the game be completed is inputted by the player. In case it is determined that the game is not completed, the processing is returned to step S110. In the meantime, in case it is determined that the game is completed, the present subroutine ends.

Fig. 22 is a flowchart showing the outline of the processing executed in the outlet server 2 while the game proceeds.

First, the CPU 201, when starting the game, sets a timer corresponding to the player in a predetermined region of the RAM 203 (step S230).

The timer value of this timer is subtracted in order at predetermined time intervals after being set, and when the player of a higher level fights against (fighting between the characters) the player of a lower level, the timer corresponding to the player of a higher level is reset, and when the timer value becomes 0, the level of the player corresponding to the timer is reduced by 1.

In step S230, the timer for all four players may be set or the timer may be set only for the predetermined numbers of players of higher level among four players. Further, the timer value may be changed according to the level of the player.

Next, the CPU 201 determines whether or not the operation command is received from the terminal 1 through the private line 5 by the communication interface circuit 204 (step S231) . This processing is a processing corresponding to step S111 of the flowchart shown in Fig. 21.

In case it is determined that the operation command is received, the CPU 201, based on the operation command received from the terminal 1, executes a command processing allowing the game to proceed (step S232). The command processing will be described later in detail by using Fig. 25.

In step S231, in case it is determined that the operation command is not received or the processing of step S232 is executed, the CPU 201 determines whether or not the identifying information (identifying information read from the character) is received from the terminal 1 through the private line 5 by the communication interface circuit 204 (step S233). This processing corresponds to step S114 of the flowchart shown in Fig. 21.

In case it is determined that the identifying information is received from the terminal 1, the CPU 201 refers to the ability value setting table, and based on the game historical data (skill), sets the level and ability value of the character (step S234). Since this processing is the same as the processing of step S212 of the subroutine shown in Fig. 16, and is previously described, the description thereof will be omitted here.

In step S233, in case the identifying information is not received or the processing of the step S234 is executed, the CPU 201 determines whether or not the timer value of the timer set corresponding to the player in step S230 becomes 0 (step S235). In case it is determined that the timer value becomes 0, the processing in which the level of the player corresponding to the timer is reduced by 1 is performed (step S236).

In step S235, in case it is determined that the timer value does not become 0 or the processing of the step S236 is executed, the CPU 201 performs the processing of setting acceptance or non-acceptance of the operation on the object displayed in the first display 11 of each terminal 1 (step S237).

Here, the processing of setting acceptance or non-acceptance of the operation in step S237 will be described.

Acceptance or non-acceptance of the operation, as described by using Fig. 9, is decided for every object. Touching the object of ";" for acceptance of the operation through the touch panel 14 makes it possible to input the instruction, but touching the object of "x" for non-acceptance of the operation through the touch panel 14 does not make it possible to input the instruction.

The CPU 201, when performing the processing of step S237 initially after the game is started, sets the timers (hereinafter referred to as operation acceptance timer) corresponding to all the players and all the characters existing on the play field to the RAM 203, respectively. Further, the processing of step S234 and the processing of step S251 (see Fig. 25) to be described later are performed, and in case a new character appears on the play field, in step S237, the CPU 201 sets the operation acceptance timer corresponding to this new character to the RAM 203.

The initial value of the timer value (hereinafter referred to also as operation acceptance timer value) of the operation acceptance timer is set according to the locomotive faculty of each player or character. Specifically, higher the locomotive faculty is, smaller the operation acceptance timer value is, and lower the locomotive faculty is, larger the operation acceptance timer value is set. The CPU 201 performs an interrupt processing and the like at a predetermined cycle, and subtracts in order the timer value of the operation acceptance timer set to the RAM 203.

The processing of step S237 is continuously performed in the course of repeating the processings of step S230 to S240. In that course, in case the operation acceptance timer value of a certain character becomes 0, in step S237, the CPU 201 permits the operation of that character, and makes the operation of the object position information stored in the RAM 203 as ";". After that, in case the instruction for that character is inputted, in step S237, the CPU 201 makes the operation of the object position information stored in the RAM 203 as "x", and the operation acceptance timer is rest.

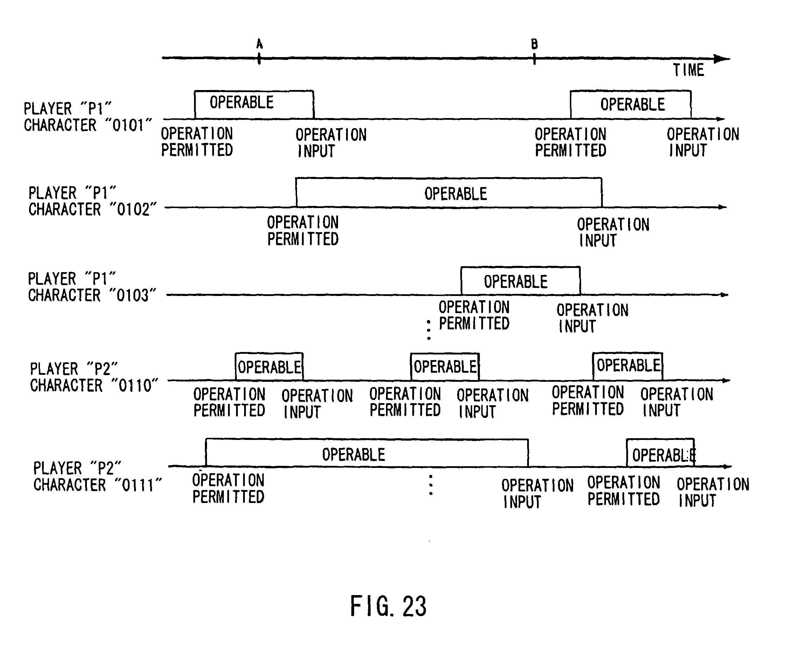

In case the processing of step S237 is thus continuously executed, acceptance or non-acceptance of the operation of each character undergoes a transition similarly to the time chart shown in Fig. 23.

In the figure, an [operation permitted] shows a timing in which the operation of the object position information stored in the RAM 203 by the CPU 201 is made as ";". Further, the [operation permitted] shows a status in which the operation of the object position information stored in the RAM 203 is made as ";". An [operation input] shows a timing in which the operation of the obj ect position information inputted with a predetermined instruction through the touch panel 14 of the terminal 1 and stored in the RAM 203 by the CPU 201 is made as "×".

The period from the [operation input] to the [operation possible] is a period in which the operation acceptance timer is subtracted in order, and when the operation acceptance timer value becomes 0, the [operationpermitted] is effected, thereby putting it in a state of the [operation possible]. Since the operation acceptance timer value is set shorter as the locomotive faculty of the character and the like become higher, it is possible to give the instruction to the character and the like having high locomotive faculty with high frequency, and the game can advantageously precede.

Further, since the period of the [operation possible] is continued until the [operation input] is effected, and is completed when the [operation input] is effected, it would be rather favorable to perform the [operation input] quickly after the [operationpermitted] is effected and make the period of the [operation possible] short so as to quicken the timing in which the next [operation permitted] is performed. As a result, it is possible to give the instruction to the character with high frequency, and the game can advantageously proceed.

Proceeding the game in real time in this manner is the characteristic of the real time strategy (RTS).

After performing the processing of step S237, the CPU 201 performs the processing of transmitting the player information and the object position information renewed in steps S232, S234, S236 or S237 to each terminal 1 (step S238) . This processing is a processing corresponding to step S115 of the flowchart shown in Fig. 21.

Next, the CPU 201, based on the processing results in steps S232, S234, S236 or S237, transmits the display command to each terminal 1 (step S239).

This processing is a processing corresponding to step S117 of the flowchart shown in Fig. 21. In step S239, the CPU 201 transmits the display command to the effect that an operable character image and an inoperable character image be displayed in different modes to each terminal 1. As a result, the first display 11 of the terminal 1 is, for example, displayed with the game image including the play field image as shown in Fig. 24.

Fig. 24 (A) is a view showing a play field image 91 displayed in the first display 11 of the terminal 1 at a point A of the time chart shown in Fig. 23. While the play field image 91 is displayed with five ally character images 98a to 98e and five enemy characters 99a to 99e, four peripheral corners of the operable ally character (the ally character 98a in Fig. 24(A)) are displayed with the images showing parentheses. Further, in the vicinity of the enemy character images (enemy characters 99a and 99b in Fig. 24 (A)) operable by the player of the fighting partner, the images showing asterisk marks are displayed.

Further, Fig. 24 (B) is a view showing the play field image 91 shown in the first display 11 of the terminal 1 at a point B of the time chart shown in Fig. 23.

In the operable ally character images (the ally characters 98b and 98c in Fig. 24(B)), the peripheral four corners of the operable ally character images are displayed with the images showing parentheses.

Next, it is determinedwhether or not the game is completed (step S240). In this processing, the CPU 201 determines that the game is completed when the fighting of four persons in the play field is completed or when the instruction to the effect that all four players complete the game is inputted.

When it is determined that the game is not completed, the processing is transferred to step S231. In the meantime, when it is determined that the game is completed, the CPU 201 transmits the game historical data stored in the RAM 203 through the communication line 4 by the communication interface circuit 204 to the center server 3 (step S241). As a result, the game historical data stored in the RAM 303 of the center server 3 is renewed.

Fig. 25 is a flowchart showing the subroutine of the command processing called and executed in step S232 of the flowchart shown in Fig. 22.

First, the CPU 201 determines whether or not the operation command to the effect that the character cardbe used is received from the terminal 1 (step S250).

In case it is determined that the operation command to the effect that the character card be used is received from the terminal 1, the CPU 201 sets play field coordinates of the character, and based on that play field coordinates, sets display position coordinates of the character image in the first display 11 of each terminal 1 (step S251). After that, the CPU 201 renews the player information stored in the RAM 203 (step S259), and further, renews the object position information stored in the RAM 203 (step S260), so that the present subroutine ends.

When executing the processings of steps S251, S259, and S260, the CPU 201 of the outlet server 2, based on the input operation by the touch panel 14 by each player, functions as the position renewal means for renewing the position data stored in the RAM 103 of the terminal 1 as the position data storage means.

In step S250, in case it is determined that it is not the operational command to the effect that the character card be used, the CPU 201 determines whether or not it is the operation command to the effect that the support cardbe used (step S252).

In case it is determined that the operation command to the effect that the support card be used is received from the terminal 1, the CPU 201 executes the processing according to the support card (step S253). After that, the CPU 201 renews the player information stored in the RAM 203 (step S259), and further, renews the object position information stored in the RAM 203 (step S260), so that the present subroutine ends.

In step S252, in case it is determined that it is not the operational command to the effect that the support card be used, the CPU 201 determines whether or not it is the operation command to the effect that an attack be made (step S254).

In case it is determined that the operation command to the effect that the attack be made is received from the terminal 1, the CPU 201 executes a fighting processing (step S255). The fighting processing will be described later in detail.

After that, the CPU 201 renews the player information stored in the RAM 203 (step S259) according to the fighting result, and further, renews the object position information stored in the RAM 203 (step S260), so that the present subroutine ends.

In step S254, in case it is determined that it is not the operational command to the effect that the attack be made, the CPU 201 determines whether or not it is the operation command to the effect that move be made (step S256).

In case it is determined that the operation command to the effect that move be made is received from the terminal 1, the CPU 201 changes the play field coordinates of the character, and based on that play field coordinates, sets the display position coordinates of the character image in the first display 11 of each terminal 1 (step S258).

After that, the CPU 201 renews the player information stored in the RAM 203 (step S259), and further, renews the object position information stored in the RAM 203 (step S260), so that the present subroutine ends.

In step S256, in case it is determined that it is not the operation command to the effect that move be made, the CPU 201 executes the processing according to other commands (step S257).

After that, the CPU 201 renews the player information stored in the RAM 203 (step S259), and further, renews the object position information stored in the RAM 203 (step S260), so that the present subroutine ends.

Next, the fighting processing executed in the outlet server 2 on the occasion of the fightingbeingperformedbetween the characters will be described.

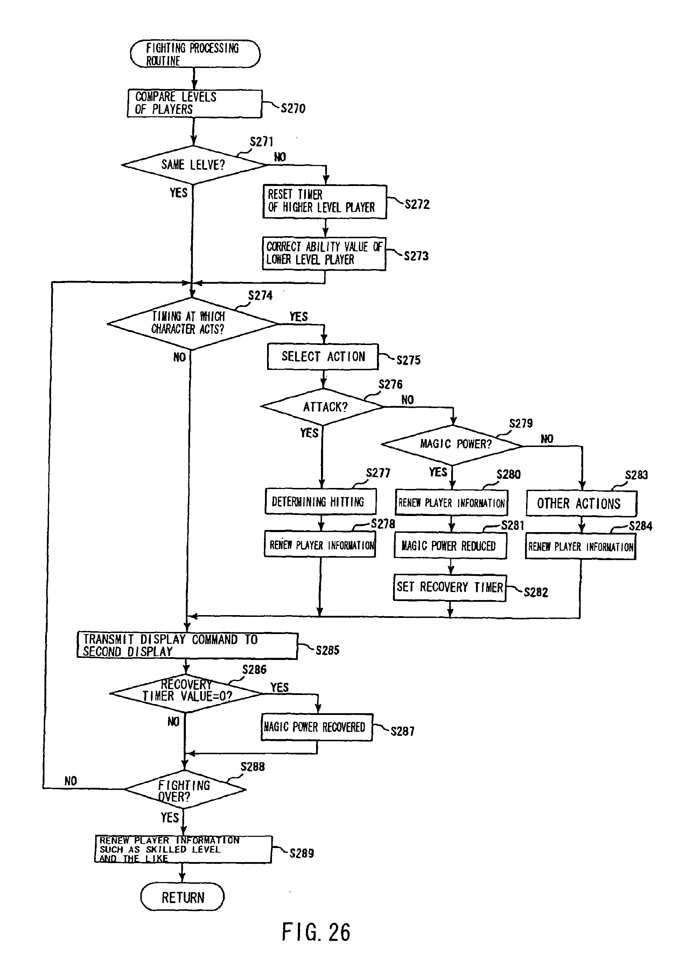

Fig. 26 is a flowchart showing the subroutine of the fighting processing called and executed in step S255 of the flowchart shown in Fig. 25.

Incidentally, in the following, a description will be made on the case as an example, where a character "0101" operated by the player "P1" and a character "0110" operated by the player "P2" shown in Fig. 20 fight against each other.

First, the CPU 201 refers to the player information stored in the RAM 203, and compares the levels of the player "P1" and the player "P2" (step S270). According to the player information shown in Fig. 20, the level of the player "P1" is 2, and the level of the player "P2" is 6. Consequently, the player "P1" is a player of higher level, and the player "P2" is a player of the lower level. In addition, the different between both levels is 4.

Next, the CPU 201, based on the comparison result in step S270, determines whether or not the level of the player "P1" and the level of the player "P2" are the same (step S271). If levels are the same, the processing is transferred to step S274, but since the level of the player "P1" and the level of the player "P2" are different, the processing is transferred to step S272.

In step S272, the processing of resetting the timer corresponding to the player of higher level is performed.

As a result, the timer value of the timer corresponding to the player of higher level is set to the initial value (value set in step S230 of the subroutine shown in Fig. 22). In the meantime, the timer corresponding to the player of the lower level is continuously subtracted.

After executing the processing of step S272, the CPU 201 performs the processing of correcting the ability value of the player of the lower level (step 273). In this processing, the CPU 201 executes the random number generation program stored in the ROM 202, and samples one random number among the range of predetermined numerical values (for example, 0 to 127). Then, based on the sampled random number and the level difference between the player "P1" and the player "P2", the CPU 201 refers to the ability value correction table stored in the ROM 202, and sets the ability value and the correction value which become correction objects.

Fig. 27 is a view showing one example of the ability value correction table stored in the ROM 202 of the outlet server 2.

The left most column is stored with three numerical value ranges (0 to 63, 64 to 95, and 96 to 127) as the random numerical values, and the right side column next to it, corresponding to each numerical value range, is stored the ability values which become correction objects. If the random numerical values are 0 to 63, the ability value which becomes the correction object is the attack hitting probability, and if the random numerical values are 64 to 95, the ability value which becomes the correction object is the critical hitting probability, and if the random numerical values are 96 to 127, the ability value which becomes the correction object is the attack evade rate.

Further, in the ability value correction table, each ability value which becomes the correction object is set with the correction value corresponding to the level difference of the player.

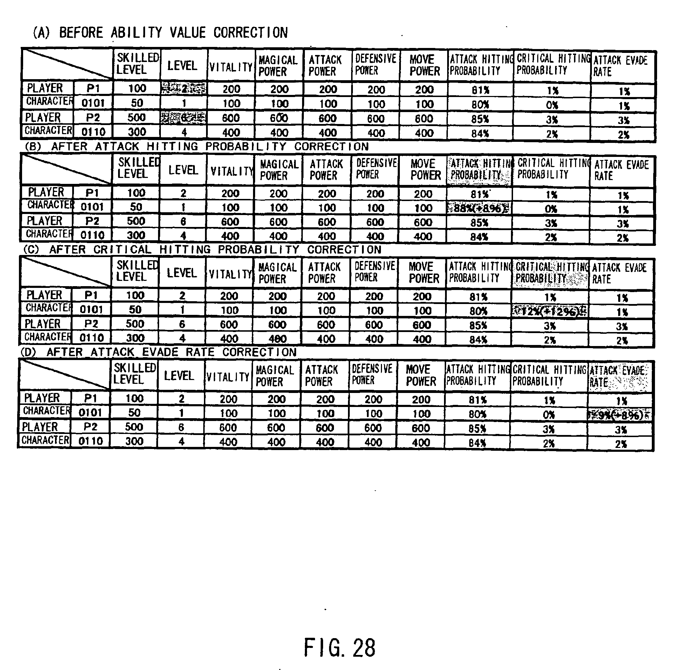

The processing in step S273 will be described by using Fig. 28.

Fig. 28 (A) shows the player information before the ability value correction, and Fig. 28 (B) to Fig. 28 (D) show the player information after the ability value correction.

As shown in Fig. 28(A), the level of the player "P1" is 2, and the level of the player "P2" is 6. The difference of both levels is 4.

For example, in case the random number value sampled in step S273 is 0, if the ability value correction table shown in Fig. 27 is referred, the ability value which becomes the correction object is an attack hitting probability, and its correction value is +8%. If the ability value is corrected in this manner, the attack hitting probability of the character "0101" operated by the player "P1" is raised by 8% from 80% to 88%, and becomes higher than the attack hitting probability 84% of the character "0110" operated by the player "P2"(see Fig. 28(B)).

Further, in case the random number value sampled in step S273 is 64, if the ability value correction table shown in Fig. 27 is referred, the ability value which becomes the correction object is a critical hitting probability, and its correction value is +12%. If the ability value is corrected in this manner, the critical hitting probability of the character "0101" operated by the player "P1" is raised by 12% from 0% to 12%, and becomes higher than the attack hitting probability 2% of the character "0110" operated by the player "P2"(see Fig. 28(C)).

Further, in case the random number value sampled in step S273 is 96, if the ability value correction table shown in Fig. 27 is referred, the ability value which becomes the correction object is an attack evade rate, and its correction value is +8%. If the ability value is corrected in this manner, the attack evade rate of the character "0101" operated by the player "P1" is raised by 8% from 1% to 9%, and becomes higher than the attack evade rate 2% of the character "0110" operated by the player "P2"(see Fig. 28(D)).

In case it is determined that the levels of both players are the same in step S271 or the processing of step S273 is executed, the CPU 201 determines whether or not it is a timing in which the character makes a move (step S274). The timing by which the character makes a move is decided by the locomotive faculty of the character. Higher the locomotive faculty is, increased the frequency of making a move is.

In case it is determined that it is a timing in which the character makes a move, the CPU 201 executes a program stored in the ROM 202, thereby selecting the move of the character (step S275). As the move of the character, for example, an attack against another character, use of magic, flight from the fighting, and the like can be cited. Further, as a method of selecting the move of the character, there is no particular limitation imposed on it, and for example, it may be selected by lottery. Further, the selection may be made according to the proceeding state of the game, the ability value of the character, and the like such as use of the magic when there are a plenty of magical power, the attack against another character when there is few magical power, and the flight from the fighting when the vitality (life force) is far below the predetermined value.

Next, it is determined whether or not the attack against another character is selected as the move of the character (step S276). In case it is determined that the attack against another character is selected, the CPU 201 performs the hitting determination of the attack (step S277). In this processing, the CPU 201, based on the attack hitting probability and the critical hitting probability of the character as well as the attack evade rate of another character, determines whether or not the attack hits another character, and in case it is determined that the attack hits another character, the CPU 201, based on the attack power of the character and the defensive power of another character, calculates damage suffered by another character.

After that, the CPU 201, based on the result of the hitting determination, renews the player information stored in the RAM 203 (step S278). Specifically, in case the attack hits another character, damage is given to another character, thereby reducing the vitality (life force) thereof.

In step S276, in case it is determined that the attack against another character is not selected, the CPU 201 determines whether or not the use of magic is selected (step S279).

In case it is determined that the use of magic is selected, the CPU 201, according to the function of the magic used, renews the player information stored in the RAM 203 (step S280). For example, in case the magic for attacking another character is used, the vitality (life force) of another character is reduced. Further, in case the magic for changing the ability value of the character is used, the ability value of the character is changed.

Next, the CPU 201 reduces the magical power of the character according to type of the magic used, and performs the processing of renewing the player information stored in the RAM 203 (step S281).

Next, the CPU 201 sets a recovery timer corresponding to the character reduced in the magical power to a predetermined region of the RAM 203 (step S282). The timer value of the recovery timer is reduced in order at predetermined time intervals after being set, and when the timer value becomes 0, the magical power of the character is recovered. In step S282, the CPU 201, based on the level difference between the character and another character, refers to the recover timer setting table stored in the ROM 202, and sets the timer value of the recovery timer.

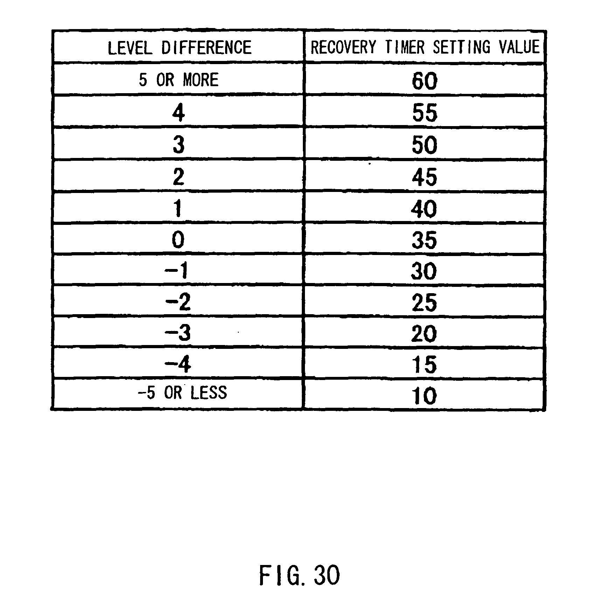

Fig. 30 is a view showing one example of the recovery timer setting table.

The left column is stored with the level difference of the player, and the right column next to it is associated with the recovery timer setting value for each level difference. For example, since the player "P1" is four points lower in level than the player "P2", the level difference is -4, and the recovery timer setting value is 15. In the meantime, since the player "P2" is four points higher in level than the player "P1", the level difference is 4, and the recovery timer setting value is 55.

In step S279, in case it is determined that the use of the magic is not selected, the CPU 201 performs various processings so that the character executes other selectedmoves (step S283). The CPU 201, according to the processing result, renews the player information stored in the RAM 203 (step S284).

In step S274, in case it is determined that it is not the timing n which the character makes a move or the processings of steps S278, S282 or S284 are executed, the CPU 201 transmits the display command for displaying a fighting image in the second display through the private line 5 by the communication interface circuit 204 (step S285).

This processing corresponds to the processings of steps S117 and S118 of the flowchart shown in Fig. 21. When the CPU 101 of the terminal 1 receives the display command by the communication interface circuit 104, it supplies the display command to the second depiction processing portion 112. The second depiction processing portion 112, according to the display command, performs a calculation, a light source computation process, and the like for converting the object (for example, the object constituting the ally character, the object constituting the enemy character, and the like) stored in the ROM 102 from the position on a three dimensional space to the position on a pseudo three dimensional space, and at the same time, based on the calculation result, performs a write processing (for example, a mapping and the like of the texture data for the region of the video RAM designated by polygon) of the image data to be depicted for the video RAM, thereby generating a fighting image and outputting it to the display 12. As a result, the second display 12 is displayed with the fighting image.

At this time, the second depiction processing portion 112 of the terminal 1 functions as the second display control means for displaying the fighting image representing the fighting between the characters performed on the play field in the second display area as the display means having the second display area.

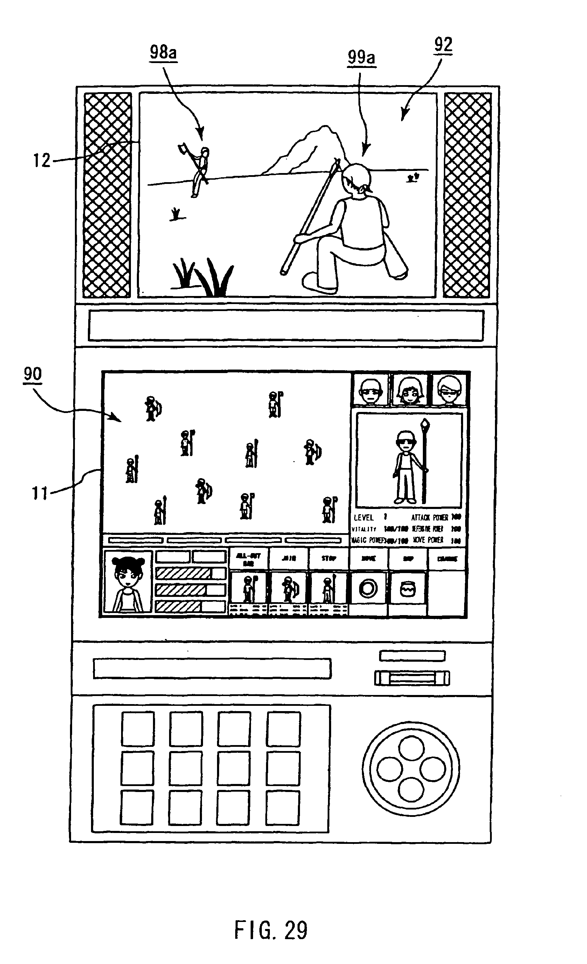

Fig. 29 is a view showing the game image displayed in the first display 11 and the fighting image displayed in the second display 12 of the terminal 1.

By the outlet server 2, the subroutine of the Fig. 26 is executed, and when the fighting between the characters is performed, as shown in Fig. 29, the first display 11 is displayed with the game image 90 including the play field image and the card images, and the second display 12 is displayed with the fighting image 92 representing the fighting between the characters.

Consequently, the player, while enjoying the fighting between the characters through the fighting image 92, can ascertain the game situation developed on the play field and can give the instructions to other characters. As a result, through the enjoyment of an overwhelming dynamic fighting, a game having a strategic property with realistic sensations and heightening of tension can be played.

After executing the processing of step S285, the CPU 201 determines whether or not the recovery timer value is 0 (step S286). In case it is determined that the recovery timer value is 0, the magical power of the character is allowed to recover, and the player information stored in the RAM 203 is renewed (step S287). As described above, since the character operated by the player having a lower level is set smaller in the timer value of the recovery timer than the character operated by the player having a higher level, the recovery of the magical power is quickened.

In step S286, in case it is determined that the value of the recovery time is not 0 or the processing of step S287 is executed, the CPU 201 determines whether or not the fighting is completed (step S288). In this processing, the CPU 201 determines that the fighting is completed when the vitality (or life force) of either character becomes 0 or either character escapes from the fighting.

In case it is determined that the fighting is not completed, the processing is returned to step S274. In the meantime, in case it is determined that the fighting is completed, the player information stored in the RAM 203 is renewed in such a manner that the skill level of the player or the character wining the fighting is increased (step S289), so that the present subroutine ends.

As described above, according to the game system of the present embodiment, the game image 90 including the play field image 91 is displayed in the first display 11 as the display means having the first display area, and at the same time, the fighting image 92 is displayed in the second display 12 as the display means having the second display area, and therefore, while enjoying the fighting between the characters by the fighting image 92, the game situation developed on the play field can be ascertained and the instructions to other characters can be given. As a result, while enjoying an overwhelming dynamic fighting, a game having a strategic property with realistic sensations and heightening of tension can be played.

Further, in the present invention, similarly to the game system according to the present embodiment, each of the terminal 1 comprises the touch panel 14, and in case the touch position shown by the detection signal outputted from the touch panel 14 matches the display position of the character in the first display 11 having the first display area, it is desirable that, based on the detection signal, the position data of the character is renewed.

Even while the fighting image is displayed, by touching the characters on the play field through the touch panel 14, suitable instructions can be given to a plurality of characters from time to time, and therefore, a game having a high strategic property with more realistic sensations and heightening of tension can be played.

Further, in the present invention, the display means (for example, the second display 12) is capable of having a plurality of second display areas, and in case a plurality of fightings between the characters are performed on the play field, it is desirable that the second display control means (for example, the second depiction processing portion 112) displays the fighting image representing each fighting in each of plural second display areas.

In case a plurality of fighting are performed on the play field, the fighting images representing each fighting can be simultaneously displayed, and therefore, the merit of the RTS in which a game having realistic sensations and heightening of tension proceeds in real time can be sufficiently enjoyed.

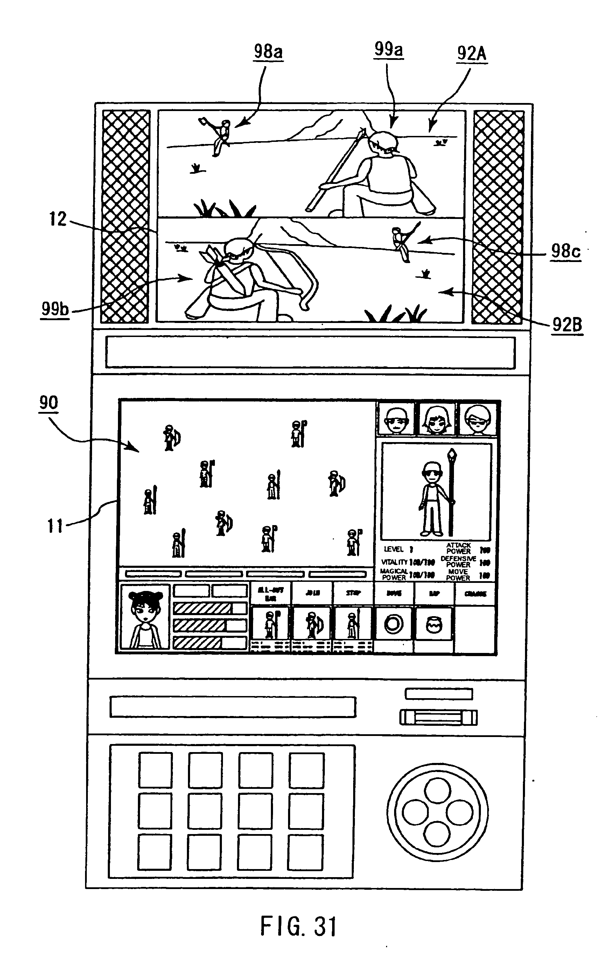

In such case, the second display 12 is displayed with, for example, the image as shown in Fig. 31.

Fig. 31 is a view showing another example each of the fighting image displayed in the first display 11 and the fighting image displayed the second display 12 of the terminal 1.

The second display 12 is displayed with fighting images 92A and 92B, which are lined-up up and down. The area in which each of the fighting image 92A and 92B is displayed is the second display area. Consequently, the second display 12 has two second display areas. The fighting image 92A is an image displayed in the aspect where the ally character image 98a and the enemy character 99a are fighting, and the fighting image 92B is an image displayed in the aspect where the ally character image 98c and the enemy character image 99b are fighting.

Further, in the present invention, it is desirable that the fighting image displayed in the second display area is made into a three-dimensional image. This is because more dynamic fighting between the characters can be displayed, thereby enhancing amusingness of the game. In the meantime, the play field image displayed in the first display area may be a second-dimensional image or a three dimensional image.

In the present embodiment, though a description has been made on the game system comprising a plurality of terminal 1, the outlet servers 2 communicatably connected to a plurality of terminal 1 through the private line 5, and the center server 3 connected to a plurality of outlet servers 2 through the communication line 4, the present invention is not limited to this example. For example, the game system comprising a simple game device (terminal), the game system comprising a plurality of game devices (terminal) communicatably connected through the communication line, the game system comprising a plurality of game devices (terminal) connected to the servers through the Internet, and the like can be adapted to the present invention.

According to the game system according to the present embodiment, even while the fighting image is displayed, the game situation in the game area can be ascertained, and a game having a high-level strategy with realistic sensations and heightening of tension can be played.

### [2. Second Embodiment of the Invention]

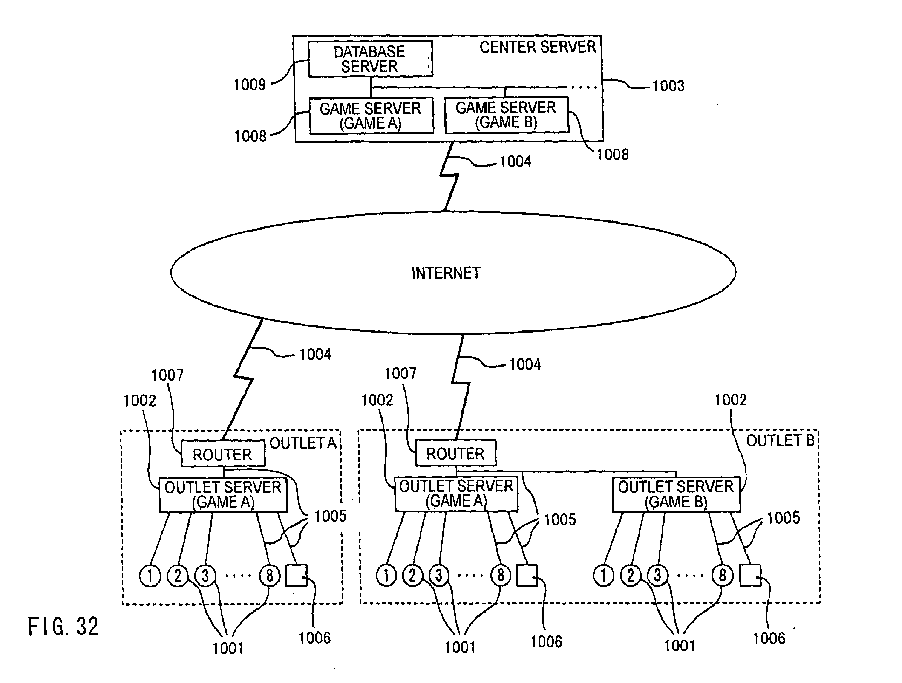

Next, a second embodiment according to the present invention will be described with reference to Figs. 32 to 48.

Fig. 32 is a structural drawing of a game system according to the present invention.

The game system comprises a plurality of terminal 1001; outlet servers 1002 communicatably connected to a plurality of terminal 1001 through a private line 1005; and a center server 1003 communicatably connected to a plurality of outlet servers 1002 through a communication line 1004, and moreover, comprises a card vending machine 1006 connected to the outlet servers 1002 through the private line 1005 one set each for every outlet. It should be noted that the outlet B is installed with an outlet server 1002 for Game A and an outlet server 1002 for Game B.

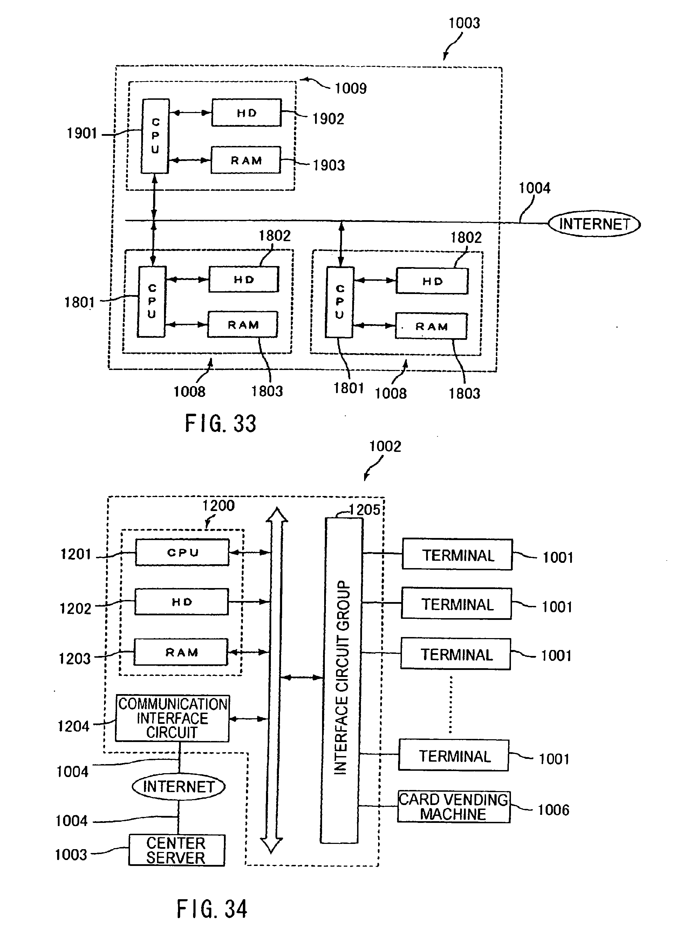

Fig. 33 is a structural drawing of the center server 1003.

The center server 1003 comprises a database server 1009 and a plurality of game servers 1008. The database server 1009 comprises a central processing unit (hereinafter referred to as CPU) 1901 as a processor; aharddisc (hereinafter referred to as HD) 1902 as a main storage; and a random access memory (hereinafter referred to as RAM) 1903 as an auxiliary storage, and performs (1-1) data control for every ID data given to each player and (1-2) certification of the player at the game starting time, and (1-3) transmission processing of the game data.

Specifically, as the (1-1), the database server 1009 performs, for example, a control (storage, setting, renewal, an the like) of an ID data given to each player, a password used at the certification time of the player, a type of the game played by the player, a game data, and the like. Further, the game data includes, for example, the preceding state of the game (character specific data and the like), the character operated by the player, the level and the ability value of the character, the increase and decrease value of the ability value, and the like. These data are stored in the HD 1902 of the database server 1009.

Further, as the (1-2), the database server 1009 uses, for example, the ID data given to every player, the ID data and the password read from the ID card by the ID card reader (not shown) provided in the terminal 1001, and performs the certification of the player and allows him to participate in the game.

Further, as the (1-3), the database server 1009, for example, based on the ID data of the player and the character ID data (identifying information) for identifying the character read from the action figure by the IC chip reader provided in the terminal 1001, transmits the ability value of the character and the like among from the game data to the terminal 1001.

However, in case it is after the second time that the player starts playing the game, even if the action figure is not used, it is possible to decide the game based on the ID data of the player, the input of the password by the operation of the player and the types of the game. Further, in case the action figure is not used, a predetermined limit can be set.

The game server 1008 is set by corresponding to every game executable in the game system according to the present embodiment. Incidentally, one set (here, game server 1008 for Game A) among from a plurality of game servers 1008 is a game server corresponding to the game according to the present embodiment. The game server 1008 comprises a CPU 1801 as a processor, a HD 1802 as a main storage, and a RAM 1803 as an auxiliary storage. The game server 1008 performs (2-1) a matching processing between the terminal 1001 installed in different outlets, and (2-2) a traffic control relative to the transmission and reception of the data after the matching.

Specifically, as the (2-1), the game server 1008 and the like, when a certain player operates the terminal 1001 so as to participate in the game, determines whether or not another player participates in the game. Then, in case it is determined that another player participates in the game, the matching with the terminal 1001 operated by that player is performed. In the meantime, in case it is determined that another player does not participate in the game, a CPU player is set. In case the CPU player is set, the outlet server 1002 may be set as the CPU player, and the center server 1003 (for example, the game server 1008 and the like) may be set as the CPU player.

Further, as the (2-2), the game server 1008 and the like perform (2-1) a traffic control relative to the transmission and reception of the data between the matched terminal 1001 by the matching processing. For example, the game server 1008 and the like transmit the data received from the terminal 1001 connected to the outlet server 2 (for Game A) of the outlet A to the terminal 1001 connected to the outlet server 2 (for Game A) of the outlet B. In this manner, the outlet server 1002 according to the present embodiment does not directly receive the data only from the center server 1003, nor directly performs the transmission and reception of the data between the outlet servers 1002.

The outlet server 1002 is, as shown in Fig. 32, connected to the center server 1003 trough a router 1007. The router 1007 has a predetermined touting table. Similarly to the outlet B shown in the figure, in case a plurality of outlet servers 1002 are installed in the same outlet, the router 1007, when received game data and the like from the center server 1003, refers to the routing table, and transmits the game data to the outlet server 1002 connected to the terminal 1001 of the transmission destination through the private line 1005. Further, in case the transmission and reception of the data is performed between the terminal 1001 connected to a plurality of outlet servers 1002, respectively, which are installed in the same outlet, when the router 1007 receives the game data and the like from the terminal 1001 via the outlet server 1002, it refers to the routing table, and transmits the game data to the outlet server 1002 connected to the terminal 1001 of the transmitting destination through the private line 1005.

Fig. 34 is a structural drawing of the outlet server 1002.

The outlet server 1002 comprises a CPU1201 as a processor, a HD 1202 as a main storage, and a RAM 1203 as an auxiliary storage. Further, the outlet server 1002 is connected a plurality of terminal 1001 through the private line 1005 by an interface circuit group 1205, and is connected to the center server 1003 through the communication line 1004 by a communication interface circuit 204.

The outlet server 1002 performs (3-1) a traffic control relative to the transmission and reception of the data between the center server 1003 and the terminal 1001 or between the terminal 1001 connected to a plurality of outlet servers 1002 installed in the same outlet, respectively, and (3-2) downloading of the application to the terminal 1001.

Specifically, as the (3-1), the outlet server 1002 performs a traffic control relative to the transmission and receipt of the game data and the like between the center server 1003 and the terminal 1001. However, in case the terminal 1001 of the transmitting destination is connected to the same outlet server 1002 or is connected to another outlet server 1002 installed in the same outlet, the game data and the like are not transmitted to the center server 1003, but are transmitted to the terminal 1001.

Further, as the (3-2), the outlet server 1002, in a timing in which a request signal to the effect that a downloading from the center server 1003 is requested is received from the terminal 1001, performs the downloading of the application to the terminal 1001. The application includes various data (for example, image data and the like) and the program relative to the game content, and a board program allocating the functions on the game to the input means (for example, a touch panel, a plurality of input switches and the like, not shown) provided in the terminal 1001, and is stored in an HD 202 of the outlet server 1002.

Further, the downloading of the application is not limited to the downloading from the outlet server 1002, but may be performed from the center server 1003 (for example, a game server 1008).

The terminal 1001 is connected to the outlet server 1002 through the private line 1005. The terminal 1001 performs (4-1) the downloading of the application and (4-2) the proceeding of the game. Specifically, as the (4-1), the terminal 1001, when the power is turned on, transmits a request signal to the effect that the application be downloaded to the outlet server 1002, and performs the downloading of the application. The downloaded application is stored in a temporarily storable region of the RAM and the like within the terminal 1001. Further, as the (4-2), the terminal 1001 uses the downloaded application and performs the proceeding of the game. The proceeding of the game is performed as follows. The terminal 1001 receives the data for every ID data given to eachplayer from the database server 1009 at the game starting time. While the game proceeds, the data with the terminal 1001 and another terminal 1001 within the same game are transmitted and received via the center server 1003 through the outlet server 1002. However, in case another terminal 1001 is connected to the same outlet server 1002 or is connected to another outlet server 1002 installed in the same outlet, the game data and the like are not transmitted to the center server 1003, but are transmitted to the terminal 1001. At the game completing time, the game data renewed during the game or the game result itself is transmitted to the database server 1009.

Incidentally, the proceeding of the game may be performed not by the terminal 1001, but by the outlet server 1002.

A card vending machine 1006 can communicate with the center server 1003 through the outlet server 1002. The card vending machine 1006 receives the input operation of personal information performed by the player, and performs the sale of the ID card stored with the ID data. The ID card is used when starting the game, and the ID data is read by an ID card reader provided in the terminal 1001.

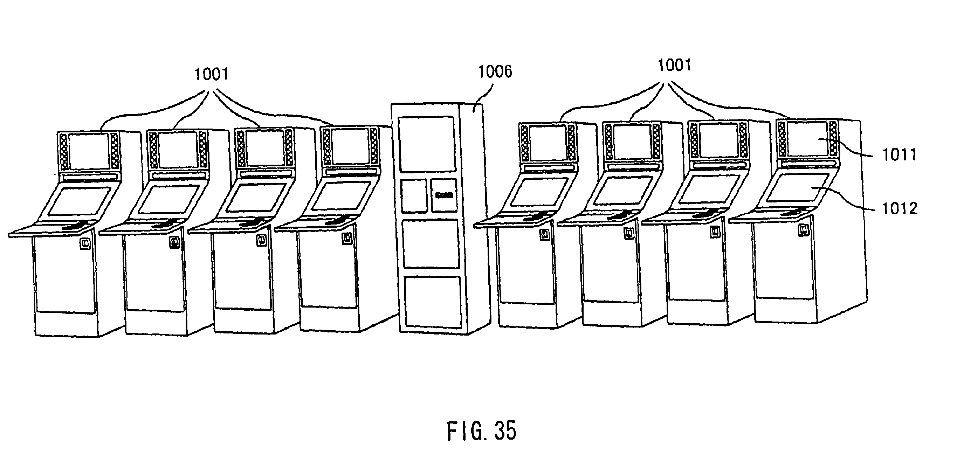

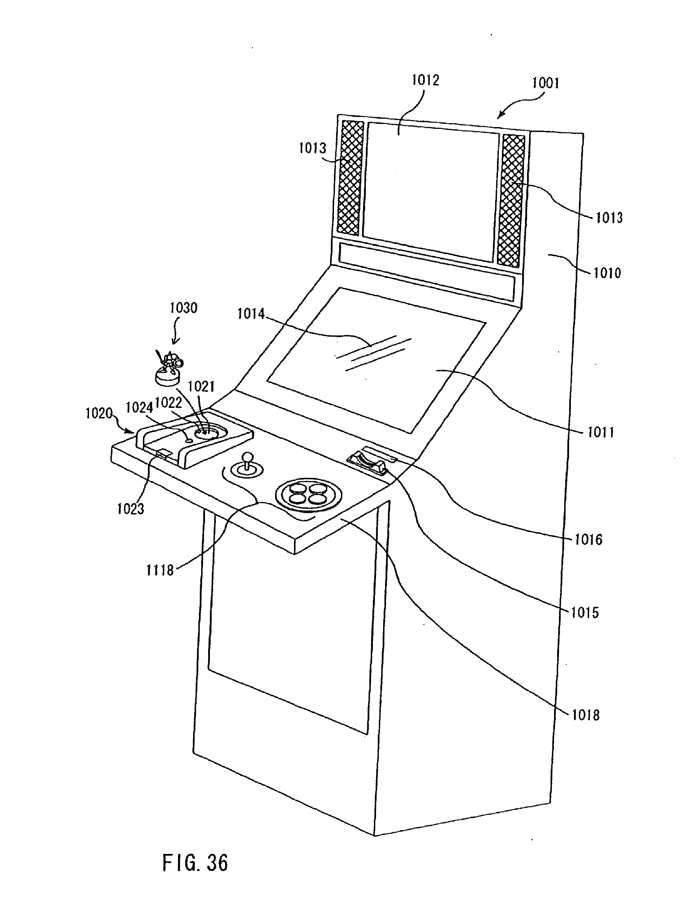

Fig. 35 is an oblique view showing the external view of eight sets of the terminal and the card vending machine installed in one outlet. Fig. 36 is an oblique view showing the external view of the terminal.

It should be noted that, in the following description, though a description on a commercial game device comprising two displays (first display 1011 and second display 1012) will be described as one example of the terminal, the present invention is not limited to this example, but can be similarly adapted to a home video game device constituted by connecting the video game device to a home television, a personal computer functioning as the video game device by executing a video game program, and the like.

Further, in the present embodiment, the game played by using the terminal 1001 is a RTS (Real Time Strategy Game) using an action figure, in which the player operating the terminal 1 and the player or a CPU player operating another terminal 1001 dispose the characters on the play field existing in a pseudo game space, and operate the characters so as to let them fight against one another. The action figure represents the character, and stores the identifying information of the character. The action figure is, for example, sold by the card vending machine 1006 and the like.

As shown in Fig. 36, the terminal 1001 comprises a case body 1010, a first display 1011 provided in the front of the cabinet 1010 so as to slant at a predetermined angle; and a second display 1012 provided above the first display 1011.

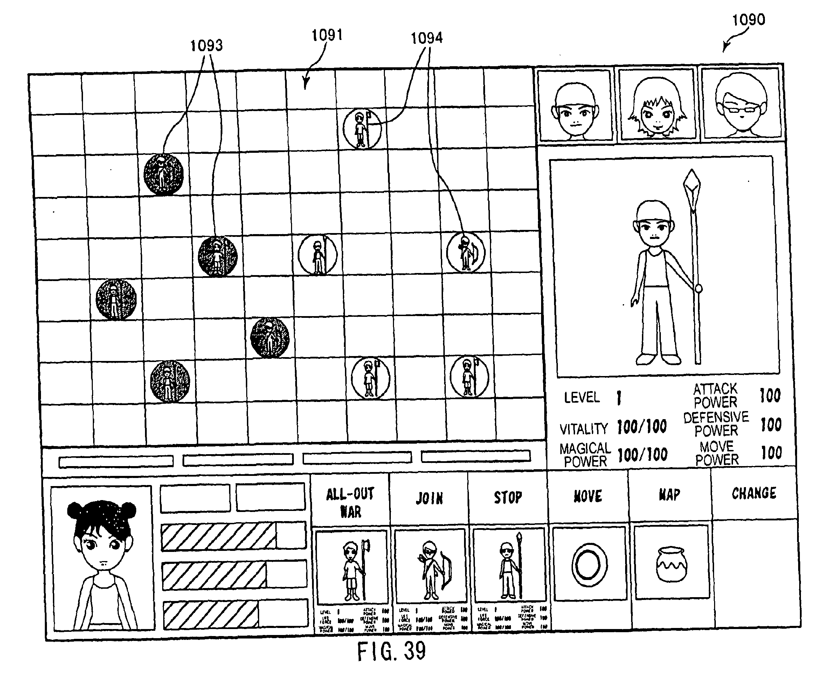

The first display 1011 is displayed with the image representing the play field where the ally character operated by the player and the enemy character operated by another player are disposed (for example, see Fig. 39).

The second display 1012 is displayed with the image representing the fighting between the ally character and the enemy character when the fighting between the ally character and the enemy character is performed in the play field.

In the present embodiment, the first display 1011 and the second display 1012 are equivalent to the display means provided in each of the terminal 1001.

The first display 1011 has the first display area displayed with the game area image (play field image) representing the game area (play field) where the ally character and the enemy character are disposed. The second display 1012, when the fighting between the ally character and the enemy character is performed in the game field (play field), has the second display area for displaying the fighting image representing the fighting between the ally character and the enemy character.

In this manner, in the present embodiment, the display means provided in each of the terminal 1 is not necessarily one display (display device), and similarly to the game system according to the present embodiment, may be two displays, and the number thereof is not particularly limited.

Further, though the game system according to the present embodiment is constituted such that, among from two displays as the display means, one display (first display 1011) has a first display area, and the remaining display (second display 1012) has a second display area, the present invention is not limited to this example, and for example, the display area owned by one display is split into a plurality of areas, and one of the split areas may be made as a first display area, and the remaining one split area or plural areas may be made as a second display area.

In front of the first display 1011 as the display means having the first display area, a touch panel 1014 is provided. The touch panel 1014 can detect a touch by the player, and outputs a detection signal showing a touched position when detecting the touch to an operation input portion 1114 (not shown) to be described later. The player can input various types of instructions by touching the touch panel 1014. Both the left and right sides of the second display panel 1012 are provided with speakers 1013, which output sounds.

Below the first display 1011, there are provided a coin insertion slot 1015 inputted with a coin, and an ID card loading slot 1016 to be inserted with an ID card. The coin inputted to the coin insertion slot 1014 is detected by a coin sensor 1115 (not shown).

The ID card inputted to the ID card loading slot 1016 has the ID data read by an ID card reader 1116 (not shown).

The case body 1010 is provided with an control board 1018 protruding in front, and on the upper surface of the control board 1018, there is provided a certification apparatus 1020 which can be mounted with an action figure.

In the figure, though a certification apparatus 1020 is shown only one set, a plurality of certification apparatuses 1020 may be provided.

In the upper part of the certification apparatus 1020, there is a recessed area 1021, with which an action figure 30 can be engaged. That is, the recessed area 1021 is shaped so that a pedestal of the action figure to be described later can be fitted without leaving a space. More than two thirds of the pedestal of the action figure can be fitted into the recessed area 1021. Further, the recessed area 1021 is provided with a stopper 1022 for fixing the action figure, and is constructed such that the action figure is prevented from coming off, falling over or displacing. Further, the certification apparatus 1020 is provided with a removing switch 23 for removing the action figure from the recessed area 1021.

Further, the inside of the certification apparatus 1020 is provided with an IC chip reader 1025 (not shown), which can read the data of the IC chip built-in the action figure.

Further, the certification apparatus 1020 is provided with a LED 1024, which flashes on and off while the IC chip reader 1025 certifies the data of the action figure.

Further, on the upper surface of the control board 18, there is provided an operation switch 1118 comprising a direction lever, a plurality of buttons, and the like. The player can operate the operation switch 118 so as to input the predetermined instructions.

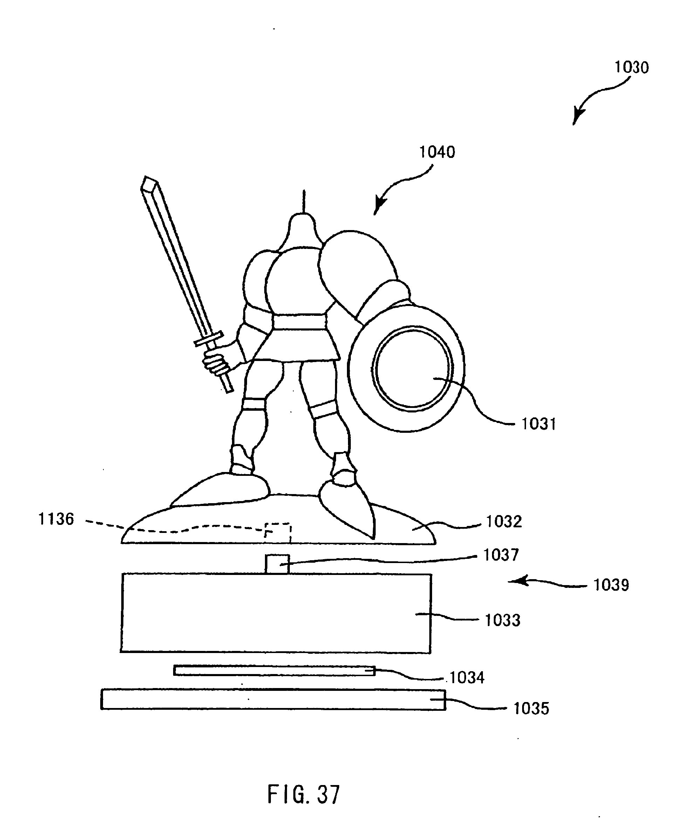

Fig. 37 is an exploded front view schematically showing one example of the action figure.

The action figure 1030 comprises a pedestal 1039 and an action figure main body 1040. The pedestal 1039 is cylindrical, and comprises a top lid 1033, an IC chip 1034, and a bottom lid 1035.

The IC chip 1034 is nipped by the top lid 1033 and the bottom lid 1035, and is constituted such that it is not taken out. The IC chip 1034 is stored with the identifying information and the like of the character displayed by the action figure main body 1040. The top lid 1033 is provided with a protrusion 1037. Further, the bottom lid 1035 is designed to be slightly larger in its diameter than the top lid 1033 so that the action figure 1030 can be fixed by the stopper 1022 of the certification apparatus 1020.

The action figure main body portion 1040 comprises an action figure main body 1031 and an action figure main body base 1032. The action figure main body base 1032 is provided with a recessed area 1036. The recessed area 1036 and the protrusion 1037 are for the purpose of preventing the displacement from occurring when the pedestal 1039 and the action figure main body 40 are connected.

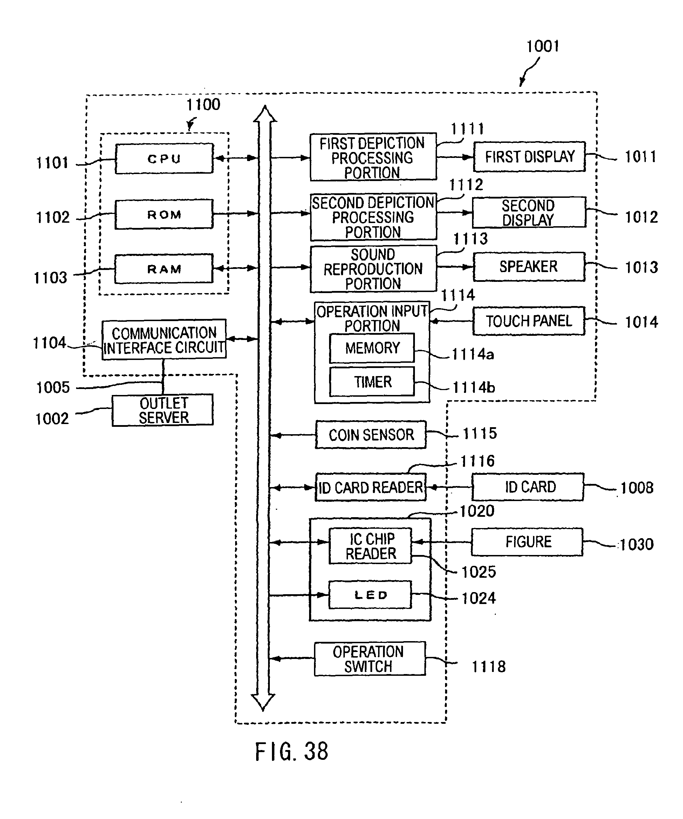

Fig. 38 is a block diagram showing a hardware structure of the terminal 1001. A control portion 1100 controls the whole action of the terminal 1001, and comprises a CPU 1101, a ROM 1102, and a RAM 1103.

The ROM 1102 stores various programs and data for realizing the function of the terminal 1001. The RAM 1103 stores the application downloaded from the outlet server 1002 and the data in process, and the like. The CPU 1101 executes the application stored in the RAM 1103, and performs the proceeding of the game.

A communication interface circuit 1104 performs the transmission and reception of the program and the data with the outlet server 1002 through the private line 1005.

A first depiction processing portion 1111 displays the game image including the play field image in the first display 1011, and comprises a VDP (video Data Processor), a video RAM, and the like. In the game system according to the present embodiment, the first depiction processing portion 1111 functions as the first display control means.

The first depiction processing portion 1111 extracts the image data stored in the RAM 1103, and stores various images in the video RAM according to the priority displayed in the first display 1011, thereby generating the game image and outputting it to the first display 1011. As a result, the first display 1011 is displayed with the game image (see Fig. 39).

A second depiction processing portion 1112 displays the fighting image representing the fighting between the ally character and the enemy character in the second display 1012, and comprises a VDP (Video Data Processor), a video RAM, and the like. In the game system according to the present embodiment, the second depiction processing portion 1112 functions as the second display control means. The second depiction processing portion 112 performs a calculation, a light source computation process, and the like for converting the image data (for example, the object, and the like) stored in the RAM 1103 from the position on a three dimensional space to the position on a pseudo three dimensional space, and at the same time, based on the calculation result, performs a write processing (for example, a mapping and the like of the texture data for the region of the video RAM designated by polygon) of the image data to be depicted for the video RAM, thereby generating a fighting image and outputting it to the second display 1012. As a result, the second display 1012 is displayed with the fighting image.

A sound reproduction portion 1113 outputs predetermined sounds, BGM, and the like to a speaker 1012.

The touch panel 1014 is a rectangular thin layer material provided in front of the first display, and is constituted such that a pressure sensitive rawmaterial comprising a linear transparent material with predetermined pitches in every direction is disposed and coated by a transparent cover or the like. This touch panel 1014 can adopt a conventionally known panel. The touch panel 1014 outputs a detection signal showing a touched position when touched to an operation input portion 1114.

The operation input portion 1114 is a micro-computer comprising a memory 1114a and a timer 1114b, and buffers a touch position as a data, which is shown by the detection signal outputted from the touch panel 1014 in the predetermined region of the memory 1114a, and determines the instruction contents in order based on the data by using the timer 1114b and the like, and provides the determined result to the control portion 1100 as an operation command. In this manner, the memory 1114a of the operation input portion 1114 is buffered with the detection signal as a data, and therefore, even when the operation input portion 1114 is, for example, inputted instantaneously with the instructions for a plurality of character images by the touch panel 1014, the processings according to the instructions can be executed simultaneously or in parallel.

The coin sensor 1115, when detecting the coin inputted from the coin insertion slot 1015, transmits a predetermined signal to the control portion 1000. The ID card reader 1116 reads an ID code from the ID card 1008 loaded into the ID card loading slot 1016, and supplies it to the control portion 1100.

The IC chip reader 1025 of the certification apparatus 1020 reads the identifying information of the character from the IC chip 1034 built-in the action figure 1030, and supplies it to the control portion 1100.

The LED 1024 of the certification apparatus 1020 flushes on and off when the certification of the action figure 1030 is performed by the certification apparatus 1020.

The operation switch 1118 supplies a predetermined signal to the control portion 1100 when operated by the player.

In the present embodiment, as shown in Fig. 38, though a description will be made on the case in which the first depiction processing portion 1111 functions as the first display control means, and the second depiction processing portion 1112 functions the second display control means, in the present invention, the terminal may be constituted such that it comprises one depiction processing portion, and this depiction processing portion functions as the first display control means and the second display control means.

In case the terminal 1010 is thus constituted, the depiction processing portion provided in the terminal 1001 performs the display of a game area image (play field image) representing a game area (play field) where the ally character and the enemy character are disposed in the first display area, and performs the display of the fighting image representing the fighting between the ally character and the enemy character in the second display area owned by the second display 1012.

Further, the terminal may be constituted such that one depiction processing portion and one display are provided. In case the terminal is thus constituted, the display area of the display is split into a plurality of areas, and one of the split areas is made as the first display area, and the remaining one area or plural areas are made as the second display area, and the processing is performed in which the depiction area processing portion displays a game area image (play field image) in the first display area, and displays the fighting image in the second display area.

Fig. 39 is a view showing one example of the game image displayed in the first display 1011 of the terminal 1001.

On the left above of the game image 1090 displayed in the first display 1011, there is disposed a play field image 1091. The play field image 1091 is an image representing a part of the play field, and is shown in scrolling according to the proceeding state (for example, move of the character and the like) of the game. The play field image 1091 is disposed with five ally characters 1093 and five enemy characters 1094.

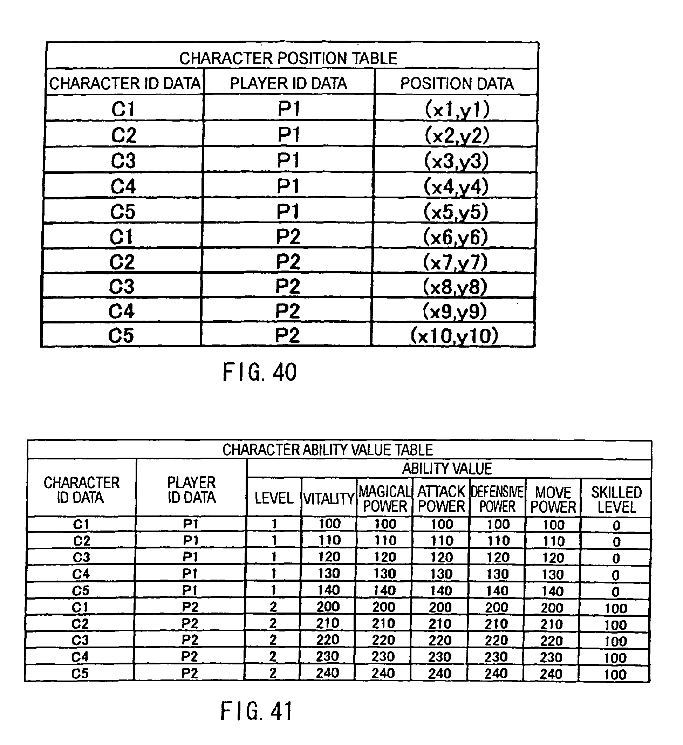

The character position table shown in Fig. 40 controls the positions between the ally characters and the enemy characters disposed in the play field image 1091. Fig. 40 is a view showing one example of the character position table.

The character position table is stored with character ID data, player ID data, and position data.

The character ID data is ID data which is allotted for every character, and is stored in the IC chip 1034 of the action figure 1030, and is read by the IC chip reader 1025 of the certification apparatus 1020 provided in the terminal 1001, and is stored in the RAM 1103.

The player ID data is a data for identifying the player having the ID card, and is stored in advance in the ID card sold by the card vending machine 1006, and is read by the ID card reader 1116 provided in the terminal 1001, and is stored in the RAM 1103.

The position data is a data shown by the coordinates of the position of the character in the play field, and is set at the game starting time or when appearing newly on the play field, and is renewed accompanied with the move of the character.

Fig. 41 is a view showing one example of a character ability value table.

The character ability value table is stored with character ID data, player ID data, and ability value of the character. These data are stored in a HD 1902 provided in the database server 1009 of a center server 1003, and are transmitted to the terminal 1001 through the outlet server 1002 in a predetermined timing (for example, at the game starting time and the like), and are stored in the RAM 1103.

The ability value is a data digitalizing the ability of the character, and is comprised of a plurality of items.

The data shown in Figs. 40 and 41 are data set in the RAM 1103 of the terminal 1001 at the game starting time, and are suitably renewed according to the proceeding state of the game while the game proceeds. Further, while the game proceeds, an interrupt processing is performed on a predetermined cycle, and a time synchronization of the data between each of the terminal 1001 is controlled. Consequently, while the game proceeds, the RAM 1103 of each of the terminal 1001 where the game is played is stored with the same position data and ability value data.

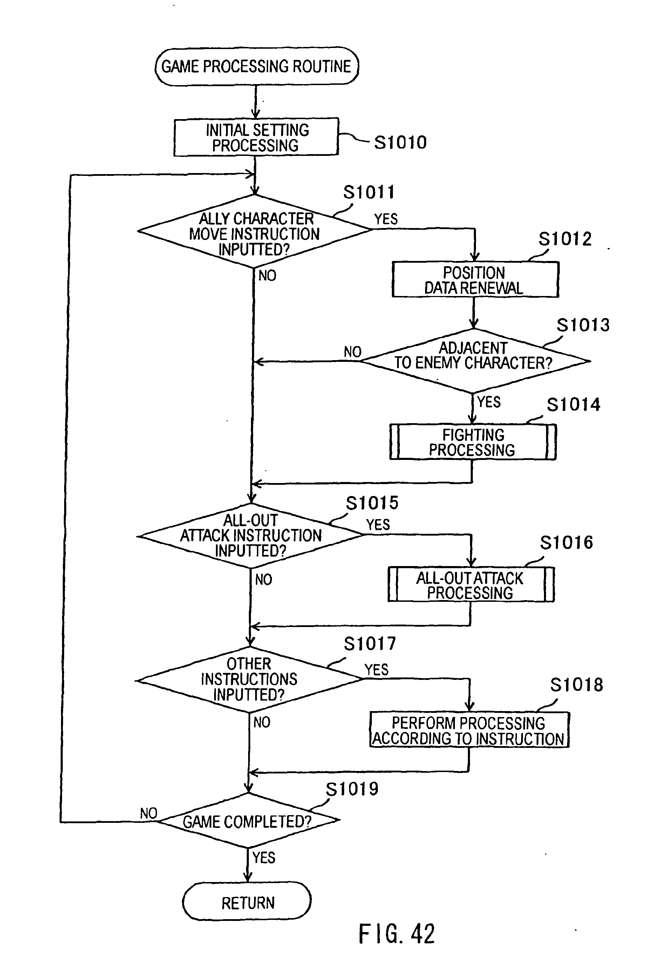

Fig. 42 is a flowchart showing the subroutine of the game processing executed in each of the terminal 1001 when the game is played.

When this game processing is performed, as described above, the interrupt processing is performed on a predetermined timing, and the time synchronization of the data stored in the character position table and the character ability value table is controlled.

First, the CPU 1101 of the terminal 1001 which starts the game performs an initial setting processing (step S1010) . In this processing, the CPU 1101, based on the player ID data read from the ID card reader 1116 and the character ID data read from the action figure 1030, acquires the ability value of the character from the database server 1009, and stores it in the RAM 1103. Then, the CPU 1101 sets the position data for each character, and stores it in the RAM 1103.

Further, the CPU 1101 performs the transmission and reception of the ability value data and the position data between other terminal 1001 which perform the same game, and stores the position data and ability value data of the character operated by each of plural players playing the same game in the RAM 1103.

The RAM 1103 functions as position data storage means for storing the position data showing the position of the ally character and the enemy character disposed in the play field (game area) where the ally character operated the player and the enemy character operated by another player can be disposed.

Next, the CPU 1101 determines through the touch panel 1014 whether or not the instruction to the effect that the ally character be moved is inputted (step S1011). The instruction to the effect that the ally character be moved is inputtedwhen the player touches the ally character by finger or the like through the touch panel 1014, and with the touching state held as it is, the finger and the like are slid.

In case it is determined that the instruction to the effect that the ally character be moved is inputted, the CPU 1101, based on this instruction, performs the processing of renewing the position data of the ally character stored in the RAM 1103 (step S1012).

At this time, the CPU 1101, based on the input operation of the player using the touch panel 1014 (input means), functions as position renewal means for renewing the position data stored in the RAM 1103 (position data storage means).

Next, the CPU 1101, based on the position data stored in the RAM 1103, determines whether or not the ally character after moving are adjacent to the enemy character (step S1013) .

In case it is determined that the ally character after moving is adjacent to the enemy character, the fighting processing to be described later is executed (step S1014).

In case it is determined that the instruction to the effect that the ally character be moved is not inputted in step S1011, in case it is determined that the ally character after moving is not adjacent to the enemy character in step S1013 or in case the processing of step S1014 is executed, the CPU 1101 determines whether or not the instruction to the effect that the all-out attack be performed is inputted (step S1015).

In the present embodiment, the all-out attack is referred to the attack by the ally character to a part or the whole of the enemy characters disposed within the predetermined range of the play field.

The instruction to the effect that the all-out attack be performed is an instruction inputtable by the operation of the operation switch 1118 by the player.

At this time, the CPU 1101, based on the input operation of the player using the operation switch 1118 (input means), functions as the attack instruction input means for inputting the instruction to the effect that the ally character carries out the attack against apart or the whole of the enemy characters disposed within the predetermined range of the play field (game area) be performed.

In case it is determined that the instruction to the effect that the all-out attack be performed is inputted in step S1017, the CPU 1101 performs the all-out attack processing to be described later (step S1016).

In case it is determined that the instruction to the effect that the all-out attack be performed is not inputted in step S1015 or the processing of step S1016 is executed, the CPU 1101 determines whether or not other instructions are inputted through the touch panel 1014 or the operation switch 1118 (step S1017). In case it is determined that other instructions are inputted, the CPU 1101 performs, for example, the processing and the like of renewing the position data or ability value data stored in the RAM 1103 according to the inputted instructions.

In case it is determined that other instructions are not inputted in step S1017 or the processing of the step S1018 is executed, the CPU 1101 determines whether or not the game is completed (step S1019). In this processing, the CPU 1101 determines whether or not the predetermined game completing condition (for example, condition that the vitality (life force) of all the ally characters or the enemy characters becomes 0 and the like) is satisfied, and in case it is determined that the condition is satisfied, it is determined that the game is completed.

In case it is determined that the game is not completed, the processing is returned to step S1014. In the meantime, in case it is determined that the game is completed, the present subroutine ends.

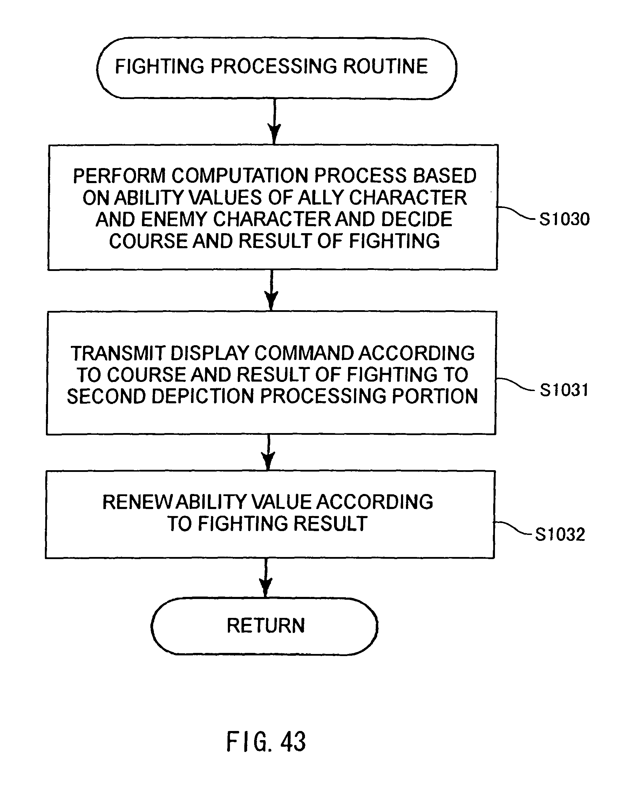

Fig. 43 is a flowchart showing the subroutine of the fighting processing called and executed in step S1014 of the subroutine shown in Fig. 42.

First, the CPU 1101 performs a computation process based on the ability values of the ally character and the enemy character stored in the RAM 1103, and decides the course and result of the fighting (step S1030).

The result of the fighting is victorious characters and the ability value of each character at the fighting completion time. The course of the fighting is a course reaching the result of the fighting described above, and specifically it is the action of each character at the fighting time (for example, physical attack, use of the magical power, defense, and the like) and the result of such action (for example, damage value and the like suffered from the attack or the magical power) .

Next, the CPU 1101 transmits a display command according to the course and result of the fighting decided in step S1030 to the second depiction processing portion 1112 (step S1031).

The second depiction processing 1112 performs a calculation, a light source computation process, and the like for converting the object (for example, the object constituting the ally character, and the object constituting the enemy character, and the like) stored in the RAM 1103 from the position on a three dimensional space to the position on a pseudo three dimensional space, and at the same time, based on the calculation result, performs a write processing (for example, a mapping and the like of the texture data for the region of the video RAM designated by polygon) of the image data to be depicted for the video RAM, thereby generating a fighting image and outputting it to the second display 1012. As a result, the second display 1012 is displayed with the fighting image.

At this time, the second depiction processing portion 1112 functions as the second display control means for displaying the fighting image representing the fighting between the ally character and the enemy character when the fighting between the ally character and the enemy character is performed in the play field (game area).

Next, the CPU 1101, according to the fighting result decided in step S1030, performs the processing of renewing the character ability value data stored in the RAM 1103 (step S1032). After that, the present routine ends.

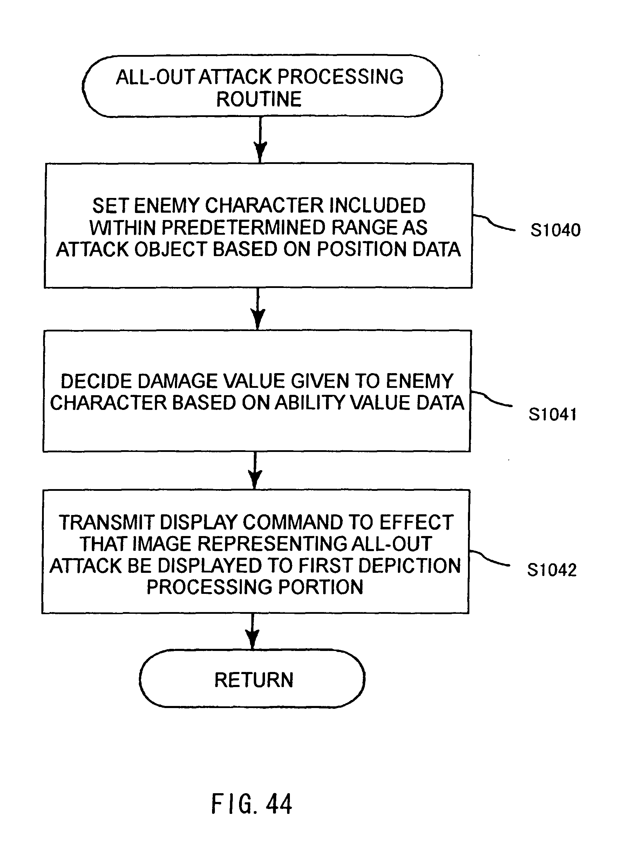

Fig. 44 is a flowchart showing the subroutine of the all-out attack processing called and executed in step S1016 of the subroutine shown in Fig. 42.

First, the CPU 1101, based on the character position data stored in the RAM 1103, sets the enemy character included in the predetermined range as the attack object (step S1040).

Next, the CPU 1101, based on the ability value data stored in the RAM 1103, decides the damage value given to the enemy character (step S1041).

Next, the CPU 1101 transmits the display command to the effect that the image representing the all-out attack by which the attack is performed to the enemy character set as the attack object in step S1040 be displayed to the first depiction processing portion 1111 (step S1042). After that, the present subroutine ends.

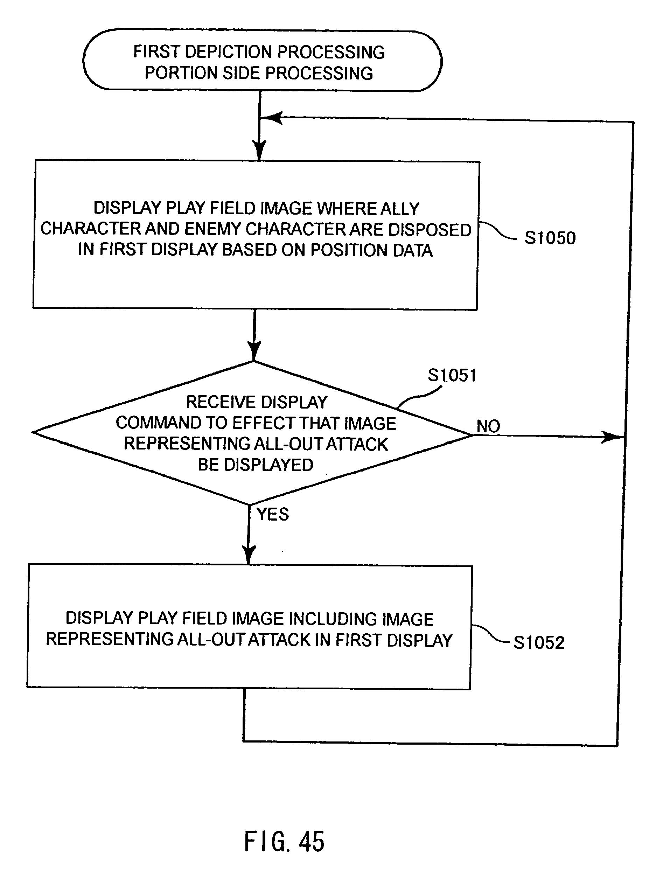

Fig. 45 is a flowchart showing the processing performed in the first depiction processing 1111.

The first depiction processing 1111, based on the position data stored in the RAM 1103, extracts the image data from the RAM 1103, and for example, stores the background image and the character image in that order in the video RAM so as to generate the play field image, and displays the play field image in the first display 1011 (step S1050).

At this time, the first depiction processing portion 1111 functions as the first display control means for displaying in the first display 1011 (first display area) the play field image (game area image) representing the play field (game area) where the ally character and the enemy character are disposed based on the position data stored in the RAM 1103 (position data storage mean).

After that, in case the display command to the effect that the image showing the all-out attack be displayed is not received from the CPU 1101 (step S1051:NO), the play field image is continuously displayed in the first display 1011.

In the meantime, in case the display command to the effect that the image showing the all-out attack be displayed is received from the CPU 1101 (step S1501: YES), the play field image including the image representing the all-out attack is displayed in the first display 1011. At this time, the first depiction processing portion 1111 functioning as the first display control means displays the play field image representing the play field where the ally character and the enemy character are disposed in the first display 1011 (first display area) in the aspect where the ally character attacks the whole or a part of the enemy character disposed in the predetermined range of the play field (game area).

Next, based on the result of the processing thus performed, the images displayed in the first display 1011 and the second display 1012 will be described.

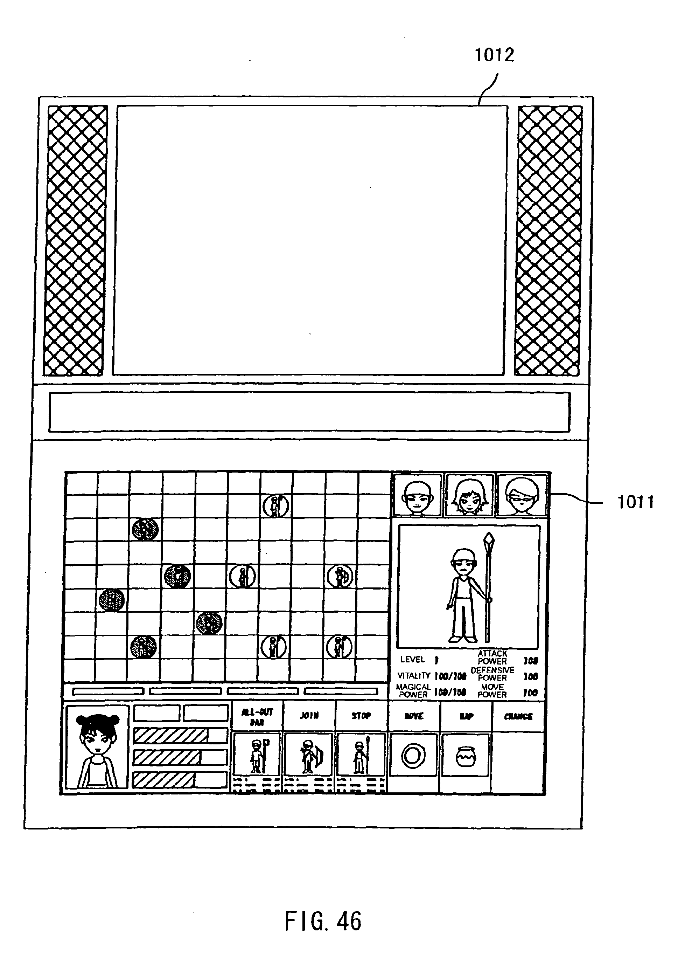

Figs. 46 to 48 are views showing the images displayed in the first display 1011 and the second display 1012 while the game proceeds.

Fig. 46 is a view showing the images displayed in the first display 1011 and the second display 1012 when the fighting between the enemy character and the ally character is not performed.

On the left above of the first display 1011, there is displayed the play field where five ally characters and five enemy characters are disposed.

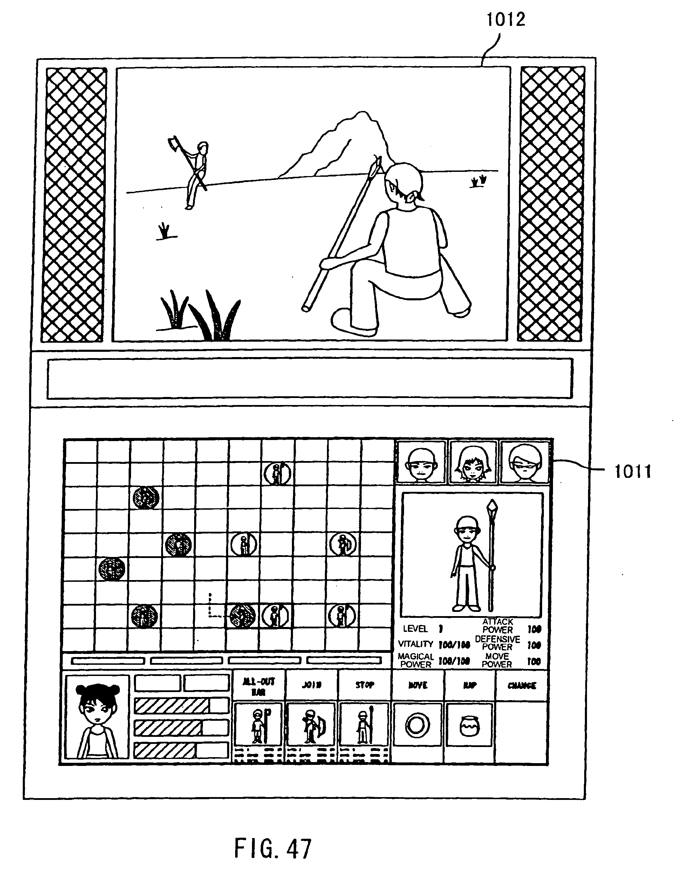

When the images shown in Fig. 46 are displayed, in case the instruction to move the ally character through the touch panel 1014 is inputted and the ally character is moved till the position adjacent to the enemy character, the fighting between these ally character and enemy character is performed, and the images shown in Fig. 47 are displayed in the first display 1011 and the second display 1012.

Fig. 47 is a view showing the images displayed in the first display 1011 and the second display 1012 when the fighting between the enemy character and the ally character is performed.

The play field image displayed on the left above of the first display 1011 is displayed with one ally character in the aspect of being adjacent to one enemy character. These adjacent ally character and enemy character are the characters in fighting.

The second display 1012 is displayed with a fighting image representing the state of the fighting between the ally character and the enemy character.

When the images shown in Fig. 47 are displayed, in case the instruction to the effect that the all-out attack by which the ally character attacks against the enemy character included in the predetermined range of the play field be performed is inputted through the operation switch 1118 and the like, the images shown in Fig. 358 are displayed in the first display 1011 and the second display 1012.

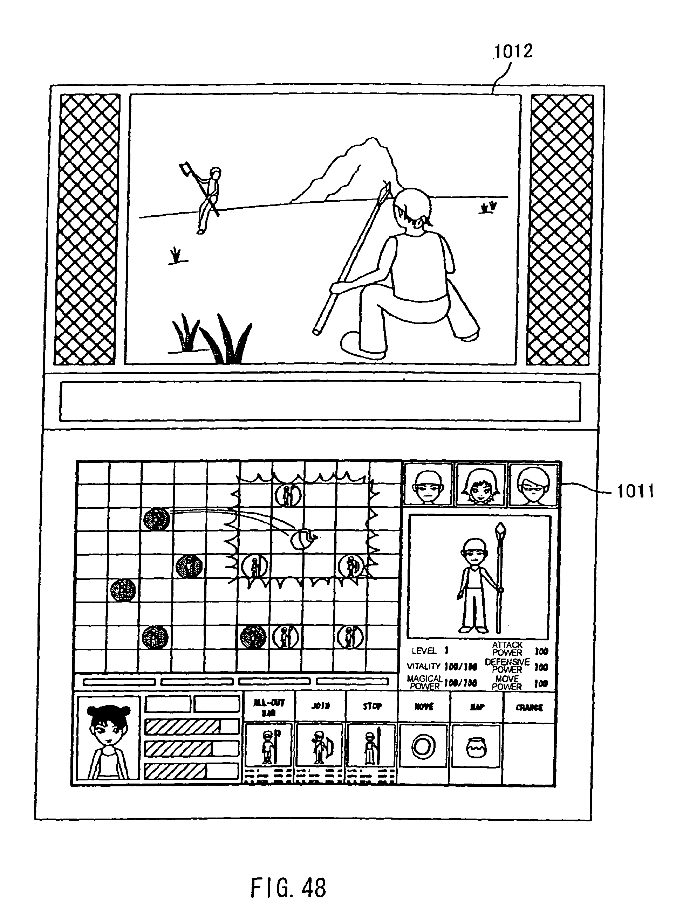

Fig. 48 is a view showing the images displayed in the first display 1011 and the second display 1012 when other ally characters perform the all-out attack against a plurality of other enemies in case the fighting between the enemy characters and the ally character is performed.

The second display 1012, as shown in Fig. 47, is displayed with the fighting image representing the state of the fighting between the ally character and the enemy character.

The first display 1011 is displayed with an image representing the state in which another ally character performs the attack by a bomb against three enemy characters included within the predetermined range of the play field.

As described above, according to the game system according to the present embodiment, the play field image (game area image) representing the play field (game area) where the ally character and the enemy character are disposed is displayed in the first display 1011 (first game area) (see Figs. 39, 46 and 47), the fighting image representing the separate fighting between the ally character and the enemy character is displayed in the second display 1012 (second game area) (see Fig. 47), and therefore, while enjoying the fighting between the characters through the fighting image, the positional relation between the ally character and the enemy character on the play field and the game situation developed on the play field can be ascertained, and the instructions to other characters can be given through the touch panel 1014.

Incidentally, in the present invention, the range of the play field, which becomes the object of the all-out attack, is not limited to the above descried example, but canbe suitably set. Further, which of the enemy characters included in the range should be made as the object of the attack is not particularly limited, and for example, all the enemy characters included in the range may be made as the object of the attack or a part of the enemy character may be made as the object of the attack. Further, the form of the all-out attack performed by the ally character is not limited to the above described example, but can be suitably set.

Further, in the present invention, for example, it is desirable that plural types of all-out attacks are provided which are different in the range of the play field which becomes the object of the all-out attack, the formof the all-out attack performed by the ally character, the damage given to the enemy character and the like can performed by the ally character because this can give diversity to the game and enhance amusingness of the game. Further, in case the ally character can carry out plural types of all-out attacks, it is desirable that the type of the attack to be performed can be selected by the input of the instruction through the input means by the player because this can enhance the strategic property of the game.

Further, even when the separate fighting between the ally character and the enemy character is performed and the state of the fighting is displayed in the second display 1012 (second display area), it is possible to input the instruction to the effect that the all-out attack by which the ally character attacks against a plurality of enemies be performed (Fig. 42, step S1015), and in case the instruction is inputted, the state of performing the all-out attack is displayed in the first display 1011 (first display area), and therefore, two aspects of the fighting such as the separate fighting between the ally character and the enemy character, and the all-out attack against a plurality of enemy characters from the ally character can be simultaneously enjoyed. As a result, while enjoying an overwhelming dynamic fighting, a game having a strategic property with realistic sensations and heightening of tension can be played.

In the present invention, similarly to the above described embodiment, it is desirable that the input means is a touch panel, and by touching the ally character through the touch panel, the instruction to the effect that the ally character be moved can be inputted. Even while the fighting image is displayed, by touching the characters on the play field (game area) through the touch panel, suitable instructions can be given to a plurality of characters from time to time, and therefore, a game having a high-level strategy with realistic sensations and heightening of tension can be played.

Further, in the present embodiment, in case a plurality of fighting are performed on the play field, it is desirable that the display area of the second display 1012 is split into a plurality of areas according to the number of fighting, and with each of the split areas taken as the second display area, the fighting image representing each fighting is displayed in each second display area.

In case a plurality of fighting are performed on the play field (game area), the fighting image representing each of the fighting can be simultaneously displayed, and therefore, the merit of the RTS in which a game having realistic sensations and heightening of tension proceeds in real time can be sufficiently enjoyed.

Additional advantages and modifications will readily occur to those skilled in the art. Therefore, the invention in its broader aspects is not limited to the specific details or representative embodiments shown and described herein. Accordingly, various modification may be made without departing from the spirit or scope of the general inventive concept as defined by the appended claims and their equivalents.

## Claims

1. A game system including a plurality of terminals each having display means and input means, and a server connected to the terminals through communication lines, said game system executing a game performing the fighting between a plurality of characters controlled by the terminals operated by a plurality of players, said game system comprising:
position data storage means storing position data representing the positions of characters disposed in the game area where a plurality of characters operated by each player can be disposed;
position renewal means renewing the position data stored in said position data storage means, based on the input operation of each player using by said input means;
first display control means displaying a game area image representing the game area where characters are disposed based on the position data stored in said position data storage means in the first display area owned by said display means; and
second display control means displaying the fighting image representing the fighting between the characters in the second display area owned by said display means when the fighting between the characters is performed in said game area.

2. A game system including a plurality of terminals each having display means and input means, and a server connected to the terminals through communication lines, said game system executing a game performing the fighting between a plurality of characters including an ally character and an enemy character controlled by the terminals operated by a plurality of players, said game system comprising:
position data storage means storing position data representing the positions of characters disposed in the game area where a plurality of characters operated by each player can be disposed;
position renewal means renewing the position data stored in saidposition data storage means based on the input operation of each player using said input means;
first display control means displaying a game area image representing the game area where the ally character and the enemy characters are disposed based on the position data stored in said position data storage means in the first display area owned by said display means;
second display control means displaying the fighting image representing the fighting between the ally character and the enemy characters in the second display area owned by said display means when the fighting between the ally character and the enemy characters is performed in said game area; and
attack instruction input means inputting the instruction to the effect that an ally character attacks against the whole or a part of enemy characters disposed within the predetermined range of said game area based on the input operation of the player using said input means,
wherein:
said first display control means, when the instruction is inputted by said attack instruction input means, display the game area image representing the game area where the ally character and the enemy characters are disposed in said first display area in the aspect where the ally character attacks the whole or a part of the enemy characters disposed within the predetermined range of the game area.

3. The game system according to claim 1 or 2, wherein said input means are a touch panel, which is provided in front of said display means, which can detect a touch by the player, and when detecting the touch, and which output a detection signal showing the touch position, wherein said position renewalmeans, in case the touch position shown by the detection signal outputted from said touch panel matches the display position of the character in the game area image displayed in said first display area, renew the position data of the character based on the detection signal.

4. The game system according to any one of claims 1 to 3, wherein said display means are capable of having a plurality of second display areas, wherein said second display control means, in case the fighting between the characters is performed in plurality in said game area, display the fighting image representing each fighting in each of plural second display areas.

5. The game system according to any one of claims 1 to 4, wherein the ally character can selectively perform any one of plural types of all-out attacks which are different in at least one of the range of the play field which becomes the object of the all-out attack, the form of the all-out attack performed by the ally character, and the damage given to the enemy character.

6. The game system according to claim 5, wherein said input means accept an input for designating any one of said plural types of the all-out attacks.
